(19) Europäisches Patentamt / European Patent Office / Office européen des brevets

(11) **EP 3 237 931 B1**

(12) **FASCICULE DE BREVET EUROPEEN**

(45) Date de publication et mention
de la délivrance du brevet:
**21.11.2018 Bulletin 2018/47**

(21) Numéro de dépôt: **15816169.5**

(22) Date de dépôt: **18.12.2015**

(51) Int Cl.:
**G01T 1/29** (2006.01)   **G01T 7/00** (2006.01)

(86) Numéro de dépôt international:
**PCT/EP2015/080658**

(87) Numéro de publication internationale:
**WO 2016/102404 (30.06.2016 Gazette 2016/26)**

(54) **PROCÉDÉ DE CALIBRATION D'UN DÉTECTEUR DE RAYONNEMENT IONISANT ET DISPOSITIF ASSOCIÉ**

VERFAHREN ZUR KALIBRIERUNG EINES DETEKTORS FÜR IONISIERENDE STRAHLUNG UND ZUGEHÖRIGE VORRICHTUNG

METHOD FOR CALIBRATING AN IONISING RADIATION DETECTOR AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2014 FR 1463093**

(43) Date de publication de la demande:
**01.11.2017 Bulletin 2017/44**

(73) Titulaires:
• **Commissariat à l'Énergie Atomique et aux Énergies Alternatives**
**75015 Paris (FR)**
• **Morpho**
**92130 Issy-les-Moulineaux (FR)**

(72) Inventeurs:
• **STANCHINA, Sylvain**
**38000 Grenoble (FR)**
• **MONTEMONT, Guillaume**
**38000 Grenoble (FR)**

(74) Mandataire: **Brevalex**
**56, Boulevard de l'Embouchure**
**B.P. 27519**
**31075 Toulouse Cedex 2 (FR)**

(56) Documents cités:
**FR-A1- 2 950 979    US-A1- 2011 297 838**

• **HE Z ET AL: "1-D position sensitive single carrier semiconductor detectors", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, vol. 380, no. 1-2, 1 octobre 1996 (1996-10-01), pages 228-231, XP004206400, ISSN: 0168-9002, DOI: 10.1016/S0168-9002(96)00352-X cité dans la demande**

**Description**

## DOMAINE TECHNIQUE

L'invention concerne les détecteurs de rayonnement ionisant, en particulier de rayonnement photonique X ou gamma, pour des applications dans le domaine nucléaire, médical ou pour le contrôle non destructif.

## ÉTAT DE LA TECHNIQUE ANTÉRIEURE

Certains dispositifs de détection de rayonnement ionisant mettent en oeuvre des matériaux détecteurs semi-conducteurs, de type CdTe, CdZnTe, polarisés par des électrodes. Généralement, une cathode et une anode, sont disposées sur deux faces opposées du matériau détecteur. Ces électrodes permettent la polarisation du matériau détecteur. Elles permettent également la collecte des porteurs de charges générés par les interactions d'un rayonnement ionisant dans le matériau détecteur.

Chaque interaction, qu'il s'agisse d'une interaction photoélectrique ou d'une diffusion Compton, voire d'une création de paires, génère plusieurs centaines, voire milliers de paires d'électrons-trous. Les électrons migrent vers la ou les anodes, tandis que les trous migrent vers la ou les cathodes. Ainsi, une interaction est un évènement générant des porteurs de charges dans le matériau semi-conducteur, ces charges migrant vers les électrodes polarisant le détecteur.

Du fait de propriétés de mobilité supérieures dans les matériaux semi-conducteurs actuellement mis en oeuvre, les électrons, collectés par l'anode, produisent un signal électronique, permettant d'estimer l'énergie perdue par le rayonnement ionisant lors de l'interaction, ou énergie de l'évènement. Des circuits électroniques connectés à l'anode permettent d'amplifier et de mettre en forme le signal, sous la forme d'une impulsion, dont la hauteur ou l'intégrale dépendent, souvent linéairement, de l'énergie de l'évènement.

Chaque électrode, qu'il s'agisse de la cathode ou de l'anode, peut être segmentée en plusieurs électrodes élémentaires. Pour des applications liées à l'imagerie, l'anode est généralement divisée en une matrice d'anodes élémentaires, chaque anode élémentaire constituant un pixel du détecteur.

Une difficulté liée à ce type de détecteur est que le signal collecté par une électrode dépend du lieu de l'évènement dans le détecteur. Par exemple, une interaction libérant la même énergie, donc un même nombre de porteurs de charge, ne produit pas le même signal si elle se produit à proximité de la cathode à proximité de l'anode. Par ailleurs, dans le cas où une électrode est segmentée en différentes électrodes élémentaires, le signal produit par une interaction dépend de la position de l'interaction par rapport aux électrodes élémentaires. Par exemple, si les électrodes élémentaires sont réparties selon une matrice, le signal produit par une interaction dépend du lieu de l'interaction dans le plan de la matrice.

Ainsi, un signal collecté par une électrode dépend non seulement de l'énergie libérée par l'interaction ayant généré ce signal, mais également de la position de l'interaction dans le matériau détecteur. Autrement dit, la réponse du détecteur n'est pas spatialement homogène et dépend du lieu d'interaction. Le document US2011/0297838 A1 concerne un procédé de calibration pour un dispositif de détection de rayonnement ionisant. Le procédé de calibration comprend notamment un certain nombre d'étapes permettant d'obtenir des relations de calibration (par exemple un facteur de correction) pour différentes profondeurs et distances radiales d'une interaction avec partage de charge. Ces relations de calibration sont ensuite utilisées pour corriger les mesures.

L'invention décrite dans cette demande répond à ce problème.

## EXPOSÉ DE L'INVENTION

Un premier objet de l'invention est un procédé de calibration d'un détecteur de rayonnement ionisant, visant à déterminer un facteur de correction en fonction du lieu d'interaction dans le détecteur.

Plus précisément, un premier objet de l'invention est un procédé de calibration d'un dispositif de détection d'un rayonnement ionisant, tel que défini par la revendication 1.

On a ainsi établi une fonction de correction J associée audit paramètre de position, avec, pour chaque valeur k de ce paramètre de position, $J(k) = j_k$.

Le procédé de calibration consiste alors à associer, pour une pluralité de valeurs k dudit paramètre de position, un facteur de correction $j_k$, chaque facteur étant associé à une valeur k.

Ce facteur est destiné à être utilisé lors de la phase de fonctionnement du dispositif de détection, lorsque, sous étant exposé à un rayonnement ionisant, le détecteur génère des signaux sous l'effet des interactions se produisant dans le matériau détecteur. Chaque interaction est affectée d'une valeur k d'un paramètre de position, et l'amplitude du signal qu'elle génère est alors pondérée par le facteur de correction $j_k$ correspondant à ladite valeur k.

Cette calibration peut être réalisée de façon automatisée, sans recours à un utilisateur, et cela lorsque le détecteur comprend une voie de mesure ou une multitude de voies de mesure. Elle peut également adresser simultanément plusieurs paramètres de position, en en particulier une position de l'interaction entre l'anode et la cathode et une position dans le plan de l'anode. Elle prend alors en compte la position en 3D de l'interaction.

Par fonction de correction associée à un paramètre de position, on entend une fonction J dont la variable k est la valeur dudit paramètre de position, la fonction de correction J(k) indiquant, pour chaque valeur k dudit paramètre de position, le facteur de correction $j_k$ à appliquer.

La valeur k du paramètre de position peut être comprise entre une valeur minimale kmin et une valeur maximale kmax, telles que kmin $\leq$ k $\leq$ kmax. kmin et kmax dépendent du paramètre de position considéré et peuvent être prédéterminées.

La fonction de correction peut être définie sur quelques valeurs k discrètes, puis être interpolée entre ces différentes valeurs discrètes, de façon à être définie sur un intervalle [kmin - kmax]. Autrement dit, les facteurs de correction $j_k$ peuvent être déterminés pour quelques valeurs k discrètes, comprises entre la valeur minimale kmin et la valeur maximale kmax, le facteur de correction associé à une valeur comprise entre deux valeurs discrètes étant alors obtenu par interpolation, par exemple par une interpolation linéaire.

L'étape b) peut comprendre :

i le chargement d'un spectre de référence initial $Sp_{ref}$, préalablement enregistré dans une mémoire, correspondant à ladite source de référence $S_{ref}$, ce spectre $Sp_{ref}$ représentant la distribution de l'amplitude du signal détecté lorsque le détecteur est irradié par ladite source de référence $S_{ref}$,

ii à partir du spectre de référence initial $Sp_{ref}$, détermination d'une pluralité de spectres de références $Sp_{refj}$, chaque spectre de référence $Sp_{refj}$ étant obtenu à partir du spectre de référence initial $Sp_{ref}$, chaque valeur $Sp_{refj}(i)$ du spectre de référence étant obtenu à partir de la valeur Spref (i/j).

Le terme coefficient de correction désigne un nombre strictement positif j, destiné à moduler le spectre de référence Spref correspondant à la source de référence, en normalisant la variable i, correspondant à l'amplitude (ou à l'énergie) de façon à établir un spectre de référence associé au coefficient de correction j $Spref_j$ tel que $Spref_j(i/j) =$ Spref (i) x $K_{norm}(j)$, le terme $K_{norm}(j)$ étant un terme de normalisation pouvant être égal à 1 ou égal à 1/j.

Les coefficients de correction j considérés peuvent être déterminés arbitrairement entre une valeur minimale $j_{min}$ et une valeur maximale $j_{Max}$. Il s'agit de valeurs discrètes, strictement positives, réparties entre les valeurs $j_{min}$ et $j_{Max}$. De préférence, $j_{min} < 1 < j_{Max}$.

L'étape c) peut comprendre :

- à chaque interaction détectée, détermination de l'amplitude A, A', d'au moins deux signaux S, S', respectivement générés par une électrode E, E' et détermination de la valeur k d'un paramètre de position de l'interaction dans le détecteur en fonction de ces signaux S, S', et notamment en combinant les amplitudes A, A', par exemple sous la forme d'un ratio A'/A.

L'étape d) peut comprendre les étapes suivantes :

i initialisation de chaque fonction de calibration $F_k$ associée à chaque valeur k dudit paramètre de position,
ii à chaque interaction détectée, détermination de la valeur k dudit paramètre de position et mise à jour de la fonction de calibration $F_k$ correspondante, en additionnant, à chaque terme $F_k(j)$ de cette fonction, la valeur du spectre de référence corrigé $Spref_j (A)$ à ladite amplitude A,
iii répétition de l'étape ii jusqu'à l'atteinte d'un critère d'arrêt prédéfini.

L'initialisation de la fonction de calibration $F_k$ peut notamment être telle que $F_k(j) = F_k^0(j)$, chaque valeur $F_k^0(j)$ représentant la valeur initiale du terme $F_k(j)$. L'ensemble des valeurs initiales $F_k^0(j)$ peuvent être égales à un même nombre, par exemple 0.

Le critère d'arrêt prédéfini peut être un nombre de mise à jours prédéterminé pour chaque fonction de calibration $F_k$, ou une durée d'irradiation du détecteur prédéfinie, ou un nombre d'interactions détectées prédéfini, ou une valeur maximale atteinte par un ou plusieurs termes $F_k(j)$ d'une ou plusieurs fonctions de calibration $F_k$.

Au cours de l'étape e), le facteur de correction $j_k$ associé à la valeur k du paramètre de position, ledit facteur de correction est déterminé en identifiant la valeur de j maximisant la valeur de la fonction de calibration $F_k$, auquel cas :

$$j_k = argmax_j [F_k (j)]$$

Le procédé mis en oeuvre selon l'invention peut comporter l'une des caractéristiques décrites ci-dessous, prises isolément ou selon toutes les combinaisons techniquement réalisables.

Parmi les électrodes reliées au matériau détecteur, on compte au moins une cathode et au moins une anode. Selon certains modes de réalisations :

- l'anode comporte une pluralité d'anodes élémentaires, notamment coplanaires, en particulier sous une forme matricielle, et/ou,
- la cathode comporte une pluralité de cathodes élémentaires, notamment coplanaires, en particulier sous forme matricielle.

Le paramètre de position d'une interaction peut être déterminé en combinant des signaux résultant de ladite interaction, issus de différentes électrodes, et par exemple

- par une anode et par une cathode, ou
- par deux anodes élémentaires, les deux anodes élémentaires étant en particulier disposées dans le même plan, ou
- par deux cathodes élémentaires, les deux cathodes étant en particulier disposées dans le même plan.

Le paramètre de position d'une interaction peut être déterminé en combinant les signaux :

- de l'anode élémentaire ayant collecté le signal d'amplitude maximal, dite anode gagnante, et
- de l'anode élémentaire adjacente de l'anode gagnante ayant collecté le signal d'amplitude maximal, dite anode secondaire,

auquel cas la valeur du paramètre de position dépend de la position de l'interaction dans le plan de l'anode gagnante et de l'anode secondaire. Le paramètre de position d'une interaction peut en particulier être obtenu en effectuant un rapport de l'amplitude du signal mesuré par l'anode secondaire sur l'amplitude du signal mesuré par l'anode gagnante.

Le paramètre de position d'une interaction peut être déterminé en combinant les signaux :

- de l'anode élémentaire ayant collecté le signal d'amplitude maximal, dite anode gagnante, et
- de la cathode ou si la cathode est répartie en différentes cathodes élémentaires, de la cathode élémentaire ayant collecté le signal d'amplitude maximal,

auquel cas la valeur du paramètre de position dépend de la position de l'interaction entre l'anode gagnante et la cathode, dite profondeur de détection et fréquemment désignée par l'acronyme DOI (Depth of Interaction). Le paramètre de position d'une interaction peut en particulier être obtenu en effectuant un rapport de l'amplitude du signal mesuré par la cathode sur l'amplitude du signal mesuré par l'anode gagnante.

Le spectre de référence initial Spref ou chaque spectre de référence $Spref_j$ comporte de préférence une ou une pluralité de pics significatifs isolés les uns des autres. De préférence, le nombre de pics $P_1...P_n$ significatifs constituant le spectre de référence est compris entre 1 et 10. Par pic significatif, on entend un pic dont la hauteur est supérieure à 2 fois, de préférence 5 fois, le niveau du bruit de fond, de part et d'autre de ce pic.

Selon un exemple, l'étape d) comprend une mise à jour itérative de la fonction de calibration $F_k$ telle que Pour tout j compris entre $j_{min}$ et $j_{max}$, $F_k{}^p(j) = F_k{}^{p-1}(j)+Spref_j(A)$

où :

- $F_k{}^{p-1}(j)$ est la valeur du terme $F_k(j)$ précédent la $p^{ème}$ itération,

- $F_k{}^p(j)$ est la valeur du terme $F_k(j)$ après la $p^{ème}$ itération,

- A est l'amplitude du signal S mesuré par une électrode suite à une interaction dont le paramètre de position est égal à pour valeur k. Dans cet exemple, on considère le signal $S_{A0}$ mesuré par l'anode gagnante A0, donc $A = A_{A0}$.

- p est l'indice d'itération correspondant au rang de la mise à jour. Lors de la première mise à jour, p= 1.

L'étape d) peut alors être réitérée pendant un nombre d'itérations prédéterminé, ou jusqu'à ce qu'entre deux mises à jour successives, la fonction de correction $F_k(j)$ associée à la valeur k n'évolue plus de façon significative, ou atteigne, pour un coefficient de correction j, une valeur prédéterminée. D'une façon générale, l'étape d) est répétée jusqu'à l'atteinte d'un critère d'arrêt prédéterminé.

Selon une variante :

▪ les étapes c), d) et e) sont répétées de façon itérative pour une même valeur k du paramètre de position, chaque étape e) aboutissant à la détermination d'un facteur de correction partiel $j_k^q$, q désignant le rang de l'itération,

▪ et, suite à la première itération, l'étape d) comprend la mise à jour de chaque terme $F_{ki}(j)$ en pondérant ladite amplitude A par le produit des facteurs de correction partiels $j_k^1 \ldots j_k^q$, associés à la valeur k du paramètre de position de l'interaction, ces facteurs ayant déterminés au cours des q itérations précédentes.

Le procédé comporte alors, lors de l'étape e) de la dernière itération, la détermination du facteur de correction $j_k$ associé à chaque valeur k du paramètre de position en fonction du produit des facteurs de correction partiels $j_k^1 \ldots j_k^Q$ déterminés lors des Q itérations successives.

Ainsi, on effectue une première détermination de facteurs de correction $j_k$ associés à une pluralité de valeurs k d'un paramètre de position, en mettant en oeuvre les étapes a) à e) précédemment décrites, ces facteurs de corrections partiels étant notés $j_k^1$. Ensuite, on réitère les étapes c), d) et e), et, lors de la mise à jour de la fonction de calibration $F_k$ associée à chaque valeur k du paramètre de position, l'amplitude A du signal S est pondérée par le facteur de correction partiel $j_k^1$ correspondant à ladite valeur k, préalablement déterminé.

D'une façon générale, lors de chaque itération q, on réitère les étapes c), d) et e), de façon à obtenir un facteur de correction partiel $j_k^q$ et, lors de l'itération suivante, la mise à jour de la fonction de calibration $F_k$ associée à chaque valeur k du paramètre de position est réalisée en pondérant l'amplitude A du signal S par les produits des facteurs de correction partiels $j_k^1 \ldots j_k^q$ correspondant à ladite valeur k, préalablement déterminés.

Selon un mode de réalisation, chaque interaction peut être caractérisée par une pluralité de paramètres de position, chaque paramètre de position de rang i ayant pour valeur $k_i$.

Dans ce cas, le procédé met en oeuvre les étapes a) et b) sont analogues à celles décrites ci-dessus. L'étape c) comprend la détermination d'un ensemble de N paramètres de position de l'interaction en fonction du signal S, N étant un entier supérieur à 1, auquel cas l'étape d) comprend la sélection d'un paramètre de position i parmi les N paramètres de position, et, pour une pluralité de valeurs $k_i$ dudit $i^{ème}$ paramètre de position, la détermination d'une fonction de calibration $F_{ki}$ telle que

▪ chaque fonction de calibration $F_{ki}$ est associée à une desdites valeurs ki dudit paramètre de position,
▪ chaque terme $F_{ki}(j)$ de ladite fonction de calibration représente une probabilité associée audit coefficient de correction j lorsque le paramètre de position prend la valeur $k_i$,
▪ chaque terme $F_{ki}(j)$ étant mis à jour, à chaque interaction dont le $i^{ème}$ paramètre de position est égal à la valeur ki à laquelle ladite fonction de calibration $F_{ki}$ est associée, en pondérant l'amplitude A, mesurée au cours de cette interaction, par au moins un facteur de correction $j_{kn}$, ledit facteur de correction $j_{kn}$, étant déterminé en fonction de la valeur $k_n$ d'un $n^{ème}$ paramètre de position caractérisant l'interaction, et en combinant l'amplitude A ainsi pondérée avec chaque spectre de référence $Sp_{ref}j$.

Par $i^{ème}$ et $n^{ème}$ paramètre de position, on entend les paramètres de position de rangs respectifs i et n dans l'ensemble constitué par les N paramètres de position caractérisant chaque interaction. Selon ce mode de réalisation, l'étape e) comprend la détermination du facteur de correction $j_{ki}$ associé à chaque valeur $k_i$ du $i^{ème}$ paramètre de position en fonction de ladite fonction de calibration $F_{ki}$ associée au $i^{ème}$ paramètre de position, et notamment en fonction d'un point remarquable de cette fonction, par exemple son maximum.

Les facteurs de correction $j_{kn}$ sont soit déterminés préalablement, soit initialisés à une valeur initiale $j_{kn}^0$. Lors de l'étape e), le facteur de correction $j_{ki}$ associé à la valeur $k_i$ du $i^{ème}$ paramètre de position est obtenu par la relation $j_{ki} = argmax_j[F_{ki}(j)]$.

On a ainsi établi une fonction de correction $J_i$ associée audit $i^{ème}$ paramètre de position, avec, pour chaque valeur $k_i$ de ce paramètre de position, $J_i(k_i) = j_{ki}$.

Par fonction de correction associée à un $i^{ème}$ paramètre de position, on entend une fonction $J_i$ dont la variable $k_i$ est la valeur dudit $i^{ème}$ paramètre de position, la fonction de correction $J_i(k_i)$ indiquant, pour chaque valeur $k_i$, le paramètre de position $j_{ki}$.

Selon ce mode de réalisation, l'étape d) peut comprendre :

i l'initialisation de chaque fonction de calibration $F_{ki}$ associée à chaque valeur ki du ième paramètre de position $k_i$,

ii à chaque interaction détectée :

- détermination des valeurs ($k_1...k_i...k_N$) des N paramètres de position caractérisant l'interaction,
- pondération de la valeur de l'amplitude A mesurée au cours de cette interaction par au moins un facteur de correction $j_{kn}$ dépendant de la valeur $k_n$ d'un nième paramètre de position caractérisant l'interaction,
- addition, à chaque terme $F_{ki}(j)$ de ladite fonction de calibration, de la valeur du spectre de référence corrigé $Spref_j(A^*)$, $A^*$ représentant la valeur de l'amplitude A pondérée,

iii répétition de l'étape ii jusqu'à l'atteinte d'un critère d'arrêt.

Par exemple, au cours de cette étape d), chaque fonction $F_{ki}$, associée à la valeur ki d'un ième paramètre de position, est mise à jour de façon itérative selon l'expression suivante :

$$F_{ki}^{p}(j) = F_{ki}^{p-1}(j) + Spref j\left(\prod_{i=1}^{N} j_{kn} \times A\right)$$

Pour tout j compris entre $j_{min}$ et $j_{max}$,

où :

- $F_{ki}^{p-1}(j)$ est la valeur du terme $F_{ki}(j)$ précédent la mise à jour,

- $F_{ki}^{p}(j)$ est la valeur du terme $F_{ki}(j)$ après la mise à jour,

- A est l'amplitude du signal S mesuré par une électrode suite à chaque interaction dont le ième paramètre de position a pour valeur $k_i$. Dans cet exemple, on considère le signal $S_{A0}$ mesuré par l'anode gagnante A0, donc $A = A_{A0}$,

- $j_{kn}$ correspondent aux facteurs de correction correspondant à un ou plusieurs paramètres de position caractérisant l'interaction, ces paramètres étant soit déterminés préalablement, soit initialisés à une valeur initiale, comme expliqué ci-dessous,

- p est l'indice d'itération. Lors de la première mise à jour, p= 1.

Selon ce mode de réalisation, lorsqu'un paramètre de correction $j_{kn}$ n'a pas été préalablement déterminé, on attribue sa valeur à une valeur initiale, par exemple égale à 1. Ainsi, préalablement aux étapes décrites ci-dessus, le procédé comporte une phase d'initialisation lors de laquelle chaque paramètre de correction $j_{kn}$ est affecté d'une valeur arbitraire initiale, par exemple égale à 1.

Dans un mode de réalisation, les étapes c), d) et e) précédemment décrites, prenant en compte une pluralité de paramètres de position, sont réalisées successivement en sélectionnant chaque fois un ième paramètre de position différent. Autrement dit, on réalise ces trois étapes c), d) et e) :

- pour un premier paramètre de position de manière à établir une fonction de correction $J_1$ associée audit premier paramètre de position, avec, pour chaque valeur $k_1$ de ce paramètre de position, $J_1(k_1) = j_{k1}$, l'étape d) étant mise en oeuvre en considérant les facteurs de corrections $j_{k1}...j_{kN}$ égaux à une valeur initiale arbitraire $j_{k1}^{0}...jk_N^{0}$, par exemple égale à 1,

- pour un nième paramètre de position, avec 1<n≤N, de manière à établir une fonction de correction $J_n$ associée audit nième paramètre de position, avec, pour chaque valeur $k_n$ de ce paramètre de position, $J_n(k_n) = j_{kn}$, l'étape d) étant mise en oeuvre en pondérant l'amplitude A mesurée par des paramètres de corrections $j_{k1}...j_{kn-1}$ préalablement déterminés, et des paramètres de corrections $j_{kn+1}...j_{kN}$ égaux à une valeur initiale arbitraire, par exemple 1.

Selon une variante :

- les étapes c), d) et e) sont répétées de façon itérative, pour une même valeur ki du ième paramètre de position chaque étape e) aboutissant à la détermination d'un facteur de correction partiel $j_{ki}^{qi}$, $q_i$ désignant le rang de l'itération,

- et, suite à la première itération, l'étape d) comprend la mise à jour de chaque terme $F_{ki}(j)$ en pondérant ladite amplitude A par le produit des facteurs de correction partiels $j_{ki}^1 \dots j_{ki}^{qi}$, associés à la valeur ki du i$^{ème}$ paramètre de position de l'interaction, ces facteurs $j_{ki}^1 \dots j_{ki}^{qi}$ ayant déterminés au cours des q$_i$ itérations précédentes.

Le procédé comporte alors, lors de l'étape e) de la dernière itération, la détermination du facteur de correction j$_{ki}$ associé à chaque valeur ki du i$^{ème}$ paramètre de position en fonction du produit des facteurs de correction partiels $j_{ki}^1 \dots j_{ki}^{Qi}$ déterminés lors des Q$_i$ itérations successives. Q$_i$ désignant le nombre d'itérations nécessaires.

D'une façon générale, selon cette variante, lors de chaque itération q$_i$, on réitère les étapes c), d) et e), de façon à obtenir un facteur de correction partiel $j_{ki}^{qi}$ et, lors de l'itération suivante, la mise à jour de la fonction de calibration F$_{ki}$ associée à ladite valeur k$_i$ du i$^{ème}$ paramètre de position est réalisée en pondérant l'amplitude A du signal S par le produit des facteurs de correction partiels $j_{ki}^1 \dots j_{ki}^{qi}$ associé à la valeur ki du i$^{ème}$ paramètre de position, préalablement déterminés. Le produit $j_{ki}^1 \dots j_{ki}^{qi}$ correspond à un facteur de correction dit intermédiaire associé à la valeur ki du i$^{ème}$ paramètre de position.

De préférence, lors de l'étape d), la fonction de calibration F$_{ki}$ est mise à jour en pondérant aussi l'amplitude A par un facteur de pondération K, ce facteur étant obtenu à partir du produit des facteurs de correction j$_{kn}$, ou des facteurs de correction $j_{kn}^1 \dots j_{kn}^{qn}$ partiels, associés aux valeurs k$_n$ des autres paramètres de position de l'interaction.

Un deuxième objet de l'invention est un dispositif de détection d'un rayonnement ionisant, permettant la mise en oeuvre du procédé précédemment décrit. Un tel dispositif se comprend notamment :

a) un détecteur, comportant un matériau détecteur semi-conducteur, s'étendant entre deux électrodes, le détecteur étant apte à générer des porteurs de charges sous l'effet d'une interaction avec le rayonnement ionisant,
b) un circuit électronique de traitement, apte à former un signal S à partir de porteurs de charges collectés par une électrode lors d'une interaction et d'en déterminer l'amplitude A,
c) un circuit électronique de localisation, apte à déterminer la valeur d'au moins un paramètre de position à ladite interaction dans le matériau détecteur à partir de différentes électrodes,
d) un circuit électronique de calibration, configuré pour mettre en oeuvre les étapes b), c) et d) et e) du procédé décrit ci-dessus.

## DESCRIPTION DES FIGURES

La figure 1 représente un schéma du dispositif de détection ;
La figure 2A représente les différentes étapes du procédé de calibration selon un premier mode de réalisation de l'invention ;
La figure 2B représente les différentes étapes du procédé de calibration selon une variante d'un premier mode de réalisation de l'invention ;
La figure 3 représente un exemple de spectre de référence Spref ;
La figure 4 représente une pluralité de spectres de référence corrigés Spref$_j$ ;
La figure 5 représente une vue en 3 dimensions d'une pluralité de spectres de référence corrigés Spref$_j$;
La figure 6 représente une fonction de calibration F$_k$, lorsque le paramètre de position k correspond à la position de l'interaction entre une cathode et une anode ;
La figure 7 représente un exemple de l'évolution du facteur de correction j$_k$ en fonction des valeurs k du paramètre de position, lorsque ce dernier correspond à la position de l'interaction entre une cathode et une anode ;
La figure 8 représente un exemple de l'évolution du facteur de correction jk en fonction des valeurs k du paramètre de position k, lorsque ce dernier correspond à la position de l'interaction dans le plan de l'anode, cette dernière étant segmentée en anodes élémentaires ;
La figure 9 représente les différentes étapes du procédé de calibration selon un deuxième mode de réalisation de l'invention ;

La figure 10 représente les différentes étapes du procédé de calibration selon un troisième mode de réalisation de l'invention.

## EXPOSÉ DÉTAILLÉ DE MODES DE RÉALISATION PARTICULIERS

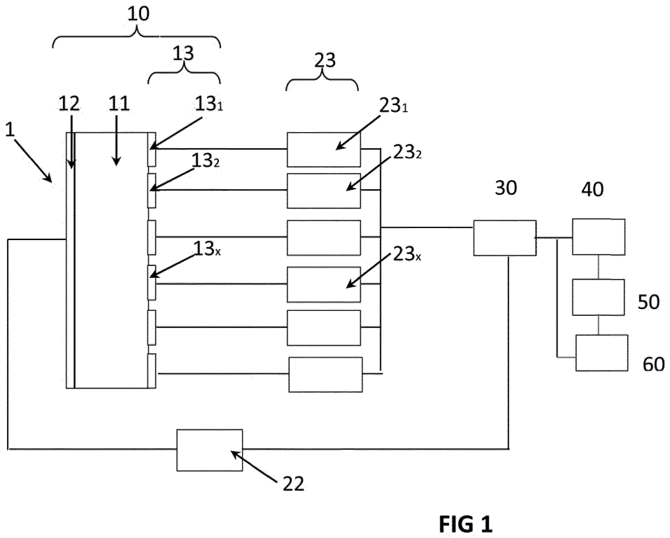

La figure 1 représente un dispositif de détection 1 d'un rayonnement ionisant selon l'invention. Il comprend un détecteur 10, réalisé dans un matériau semi-conducteur 11, apte à être polarisé par une cathode 12 et une matrice d'anodes élémentaires 13. Cette matrice d'anodes est constituée d'anodes élémentaires $13_1....13_p$. Le matériau semi-conducteur est, dans cet exemple, CdTe. Il peut s'agir d'un autre matériau semi-conducteur communément utilisé pour la détection de rayonnements ionisants (Si, CdZnTe...). L'épaisseur du matériau est de quelques millimètres, par exemple 5 mm.

Dans un matériau de type CdTe, les électrons présentent des propriétés de mobilité de charges plus favorables. Aussi, les signaux donnant une information la plus précise sur l'énergie déposée par une interaction dans le détecteur sont ceux issus de ou des anodes élémentaires $13_1..13_x...13_p$.

Dans cet exemple, la cathode 12 est unique, mais de même que pour l'anode, une division en de multiples cathodes élémentaires serait envisageable.

Chaque anode élémentaire $13_x$ est réalisée en disposant un matériau conducteur à la surface du matériau semi-conducteur. La dimension de chaque anode élémentaire 13x est par exemple (à compléter), l'espacement entre chaque anode élémentaire étant de 50nm à 3 mm, de préférence entre 100 nm et 1 mm.

De façon symétrique, la cathode 12 est réalisée en disposant un matériau conducteur à la surface du matériau semi-conducteur, généralement la surface opposée à la surface accueillant l'anode.

Dans cet exemple, le matériau détecteur 11 est un parallélépipède de CdZnTe d'épaisseur 5 mm et de 20 mm de côtés.

Le dispositif comprend également :

- un premier circuit électronique $23_x$ d'amplification, associé à chaque anode élémentaire $13_x$ de façon à produire un signal d'anode dont l'amplitude est proportionnelle au nombre de porteurs de charges collectés par l'anode élémentaire à la suite d'une interaction. Un tel circuit est connu et ne sera pas décrit dans le détail,

- un deuxième circuit électronique 22 d'amplification, associé à la cathode 12 de façon à produire un signal de cathode dont l'amplitude est proportionnelle au nombre de porteurs de charges collectés par la cathode à la suite d'une interaction. Un tel circuit est connu et ne sera pas décrit dans le détail. Un tel circuit est optionnel.

Ainsi, d'une façon générale, chaque interaction dans le détecteur entraîne la collection de porteurs de charges par au moins une électrode E, (anode A ou cathode K) de façon à générer un signal électronique S dont l'amplitude est A.

Le terme amplitude désigne la hauteur maximale d'un signal, lorsque ce dernier a la forme d'une impulsion. Il peut également s'agir de l'intégrale de ce signal, ou toute autre fonction de la hauteur maximale ou de l'intégrale. D'une façon générale, l'amplitude représente la quantité de charges collectées par l'électrode E lors d'une interaction.

Une interaction entraîne fréquemment la collection de porteurs de charges par plusieurs électrodes E, E', E"... le circuit de d'amplification associé à chacune de ces électrodes produisant alors des signaux S, S', S"...d'amplitudes respectives A, A', A". On désigne par le terme d'électrode « gagnante » l'électrode E produisant le signal S d'amplitude A maximale.

Chaque circuit d'amplification ($23_x$, 22) peut comporter un amplificateur, affectant le signal électronique d'un gain G. Le gain de chaque circuit d'amplification est déterminé préalablement par l'homme du métier.

Le dispositif de détection 1 comprend également un circuit électronique de localisation 30, apte à déterminer la valeur k d'un paramètre de position de l'interaction dans le détecteur 11.

Par paramètre de position, on entend un paramètre, déterminé à l'aide d'au moins un signal S détecté une électrode, et dépendant de la position de l'interaction dans le détecteur 11.

Cette position peut être :

i une position entre la cathode 12 et l'anode 13, c'est-à-dire une coordonnée $Z_{INT}$ de l'interaction selon un axe s'étendant entre la cathode et l'anode. Cette position, dite profondeur d'interaction, et dont l'acronyme est DOI (Depth of Interaction), traduit la distance $Z_{INT}$ entre l'interaction et l'anode (ou la cathode),

ii une position dans le plan de l'anode 13, c'est-à-dire un couple de coordonnées ($X_{INT}$,$Y_{INT}$) de l'interaction dans le plan de l'anode.

Le circuit électronique de localisation 30 détermine la valeur k du paramètre de position d'une interaction en utilisant les signaux électroniques S, S', S" générés par une ou plusieurs électrodes E, E', E". La valeur de ce paramètre de position est généralement calculée au moins à l'aide du signal S de l'électrode touchée, en particulier de l'anode touchée, mais cela n'est pas impératif.

Le paramètre de position k peut être défini à l'aide d'un seul signal électronique S : par exemple, si une seule anode A0, parmi les différentes anodes élémentaires 13x, collecte un signal S significatif, la valeur k du paramètre de position correspond à la position de l'anode A0. On considère alors que la position de l'interaction dans le plan de l'anode 13 correspond aux coordonnées $(X_0, Y_0)$ du centre de l'anode A0, ces coordonnées $(X_0, Y_0)$ constituant la valeur du paramètre de position.

Par signal significatif, on entend un signal dont l'amplitude est supérieure à un certain seuil, ce dernier étant déterminé en fonction du bruit électronique, de manière à éviter les fausses détections.

Cependant, lorsque les anodes sont suffisamment rapprochées les unes des autres, les porteurs de charges peuvent se répartir sur plusieurs anodes élémentaires 13x adjacentes. L'anode élémentaire collectant le signal dont l'amplitude est maximale est désignée par le terme anode gagnante (ou anode touchée), et notée A0. De même que dans le paragraphe précédent, la valeur du paramètre la position de l'interaction dans le plan de l'anode correspond à $(X_0, Y_0)$.

La valeur k d'un paramètre de position peut être déterminée en combinant au moins deux signaux S, S' respectivement détectés par des électrodes différentes E, E'.

Il peut s'agir d'un ratio entre l'amplitude du signal de la cathode K, sur l'amplitude du signal de l'anode touchée A0. Le paramètre de position indique alors une position de l'interaction entre l'anode gagnante A0 et la cathode K, ce qui correspond à la profondeur d'interaction $Z_{INT}$ précédemment définie.

Il peut s'agir d'un ratio entre l'amplitude des signaux entre deux anodes adjacentes, et notamment le signal de l'anode secondaire A1 et le signal de l'anode gagnante A0, l'anode secondaire correspondant à l'anode, adjacente de l'anode gagnante, dont le signal a l'amplitude la plus élevée. Plus le ratio $A_{A1}/A_{A0}$ est faible plus la position de l'interaction, dans le plan de l'anode 12, est proche du centre de l'anode gagnante A0. Plus ce ratio est élevé, plus la position de l'interaction s'éloigne du centre de l'anode $A_{A0}$, en direction du centre de l'anode $A_{A1}$. Lorsque le ratio est égal à 1, l'interaction est située entre l'anode gagnante et l'anode secondaire. Lorsque ce ratio est égal à 0, l'interaction est centrée par rapport à l'anode gagnante.

Naturellement, plusieurs signaux S, S', S", S'" issus d'électrodes adjacentes E, E', E", E'" peuvent être combinés pour obtenir une détermination encore plus précise de la position de l'interaction dans le plan de l'anode.

Le dispositif de détection 1 comprend également un circuit électronique de calibration 40, apte à mettre en oeuvre le procédé de calibration du détecteur. Ce circuit est un élément important de l'invention et sera décrit par la suite.

Le dispositif de détection 1 comprend une mémoire 50, comportant les facteurs de correction déterminés par le procédé de calibration détaillé ci-dessous. Pour chaque paramètre de correction, on associe un facteur de correction $j_k$ pour différentes valeurs k dudit paramètre de correction.

Le dispositif de détection 1 comprend également un circuit électronique de correction 60, apte à appliquer, à un signal d'électrode S, un facteur de correction $j_k$ dépendant de la valeur k d'au moins un paramètre de position de chaque interaction dans le matériau semi-conducteur 11. Ces facteurs peuvent notamment être issus de la mémoire 50. En général, on affecte un facteur de correction à l'amplitude A du signal S de l'anode gagnante A0 (ou, le cas échéant, au signal de la cathode gagnante K0). Cette amplitude est alors corrigée en fonction de la valeur k dudit paramètre de position, comme expliqué par la suite.

Le dispositif de détection est apte à détecter un rayonnement ionisant. Le terme rayonnement ionisant désigne un rayonnement apte à générer des porteurs de charges dans le détecteur 11. Il peut en particulier s'agir de rayonnement X, $\gamma$, de particules chargées (notamment $\alpha$ ou $\beta$) ou de neutrons.

Les circuits d'amplification 22, 23 et le circuit de localisation 30 sont connus et ne seront pas décrits dans le détail.

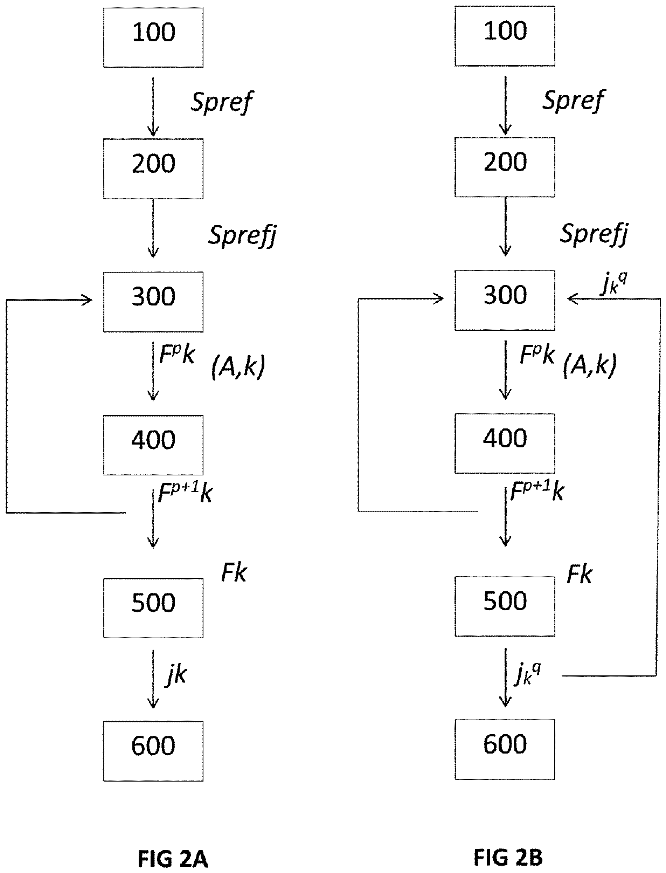

Le procédé de calibration, mis en oeuvre par le circuit électronique de calibration 40, va à présent être décrit, en lien avec la figure 2A. Sa fonction est d'établir, pour différentes valeurs k d'un paramètre de position, un facteur de correction $j_k$, ce facteur de correction étant destiné à être appliqué, par la suite, à l'amplitude d'un signal S collecté par une électrode, et plus particulièrement par l'anode gagnante, lorsque ce signal résulte d'une interaction dont la valeur du paramètre de position est égale à k.

Ainsi, un objectif de l'invention est de permettre la pondération de l'amplitude d'un signal détecté par un facteur de correction déterminé en fonction de la position de l'interaction dans le détecteur, cela afin de tenir compte de l'hétérogénéité spatiale de la réponse du détecteur.

Le circuit électronique de calibration 40 est configuré pour effectuer une calibration du dispositif de détection 1, de façon à corriger l'hétérogénéité spatiale de sa réponse. Ce circuit de calibration est mis en oeuvre lorsque le dispositif de détection 1 se trouve dans un mode de calibration.

L'idée de base de la calibration est d'irradier le dispositif de détection 1 à l'aide d'une source de rayonnement ionisant connue, dite source de référence $S_{ref}$, pour laquelle la réponse théorique du dispositif de détection est connue. Il s'agit alors d'analyser les signaux produits en réponse à cette irradiation, et de déterminer une correction appropriée, sur la base de la réponse théorique du détecteur face à cette source de référence, cette réponse théorique pouvant être qualifiée de réponse de référence.

La figure 2 représente les étapes d'un premier mode de réalisation du procédé de calibration. Dans une première étape 100, on place une source de référence $S_{ref}$ face au dispositif de détection 1, sachant que la réponse $Sp_{ref}$ du dispositif, dans cette configuration, est connue. Dans cet exemple, la réponse du détecteur est un spectre en énergie, produit par le détecteur en réponse à la source.

Par spectre en énergie, on entend la distribution en amplitude des signaux S issus d'une électrode E au cours de l'exposition du détecteur à une source de rayonnement. Un tel spectre se présente sous la forme d'un histogramme Sp, dont chaque terme Sp(i) représente le nombre de signaux détectés par l'électrode considérée, et dont l'amplitude est égale à i. Par amplitude égale à i ; on entend une amplitude comprise dans une plage d'amplitude $\Delta i$ comprenant la valeur i, et par exemple centrée autour de la valeur i.

Cette réponse peut être déterminée en modélisant le détecteur. Elle peut également être déterminée expérimentalement, en adoptant une durée d'acquisition suffisamment longue pour être statistiquement représentative. Les réponses obtenues sur chaque anode élémentaire 13x peuvent alors être moyennées pour former une réponse de référence $Sp_{ref}$ du détecteur face à la source. Alternativement, la réponse peut être déterminée en sélectionnant les interactions ayant un paramètre de position déterminé, et en réalisant le spectre d'amplitude des signaux collectés lors de ces interactions.

Dans l'exemple considéré, la réponse de référence $Sp_{ref}$ est un spectre en énergie correspondant au spectre « théoriquement » produit par le détecteur 11 en réponse à la source de référence Sref.

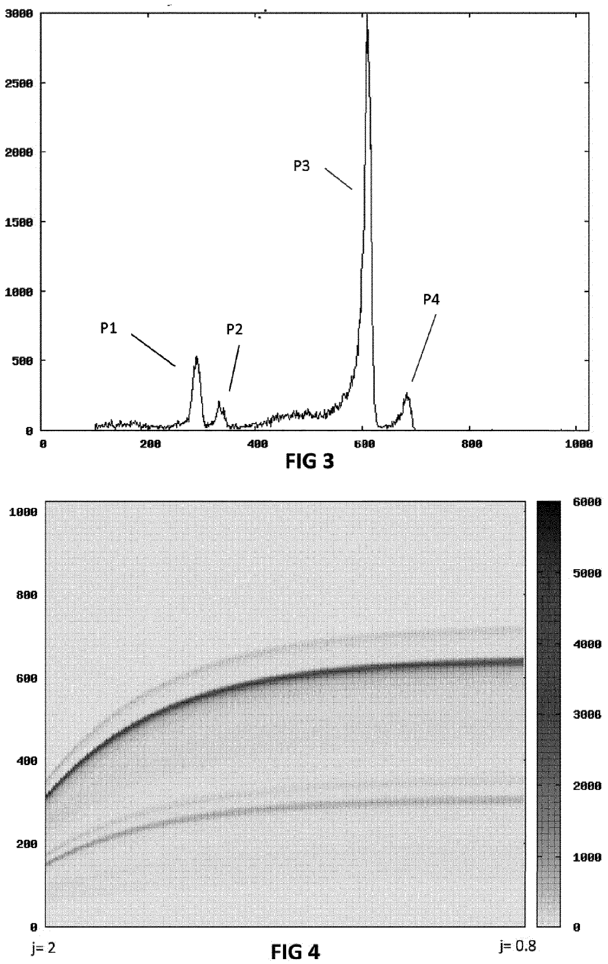

La figure 3 représente un tel spectre de référence $Sp_{ref}$. Il comporte plusieurs pics P1, P2, P3, P4 se distinguant du bruit de fond B. Il est préférable que le spectre de référence initial Spref comporte au moins un pic, et de préférence entre 1 et 20 pics. De préférence, la largeur à mi-hauteur d'un pic est inférieure au dixième, voire au vingtième ou au trentième de la dynamique du spectre, cette dernière correspondant à la plage d'amplitude selon laquelle est enregistrée le spectre. De préférence, chaque pic a une hauteur supérieure à au moins deux fois, mieux au moins cinq fois le niveau du bruit de fond de part et d'autre du pic. L'exemple de la figure 3 représente le spectre d'une source de ${}^{57}$Co. On distingue le pic photoélectrique, qui correspond à l'émission de photons gamma d'énergie 122 keV, ainsi que des pics de fluorescence X du matériau constituant le collimateur de la source, en l'occurrence du Tungstène.

Un tel spectre $Sp_{ref}$ peut être assimilé à une distribution de probabilité de mesurer une amplitude donnée connaissant la source irradiant le détecteur.

La première étape 100 du procédé de calibration est de charger un spectre de référence Spref, correspondant à une source de référence Sref. Ce spectre de référence est désigné spectre de référence initial.

La deuxième étape 200 a pour objectif d'établir, à partir du spectre de référence initial $Sp_{ref}$, une pluralité de spectres de référence $Sp_{refj}$, chacun étant associé à un facteur de correction j. Chaque spectre $Sp_{refj}$ correspond au spectre de référence initial $Sp_{ref}$ moyennant la prise en compte d'un facteur de correction égal à j. Un coefficient de correction j est un coefficient strictement positif, compris entre une valeur minimale $j_{min}$ et une valeur maximale $j_{max}$. $j_{min}$ et $j_{max}$ sont définis arbitrairement. Dans cet exemple, $0.8 \leq j \leq 2$. De préférence, l'intervalle $j_{min} < 1$ et $j_{max} > 1$. Les valeurs de j sont sélectionnées sont prédéterminées.

Plus précisément, si $Sp_{ref}(i)$ désigne la valeur du spectre $Sp_{ref}$ correspondant au canal d'amplitude i, le spectre de référence associé au coefficient de correction j peut s'écrire $Spref_j(i) = Sp_{ref}(i/j)$. Chaque canal d'un spectre $Sp_{refj}$ représente le nombre de signaux collectés dont l'amplitude est située dans un intervalle $\dfrac{\Delta i}{j}$ centré autour de la valeur $\dfrac{i}{j}$.

L'égalité précédente peut également comporter un terme de normalisation $K_{norm}(j)$, pouvant être égal à 1 ou égal à 1/j, auquel cas $j(i) = \dfrac{Spref(i/j)}{j}$. Une telle normalisation permet de conserver l'intégrale du spectre Spref.

Lorsque le coefficient de correction j est supérieur à 1, le spectre de référence $Spref_j$ correspond à une compression du spectre de référence initial Spref, dans la mesure où l'information du spectre est concentrée sur un nombre de canaux inférieurs au nombre de canaux constituant le spectre Spref.

Inversement, lorsque le coefficient de correction j est inférieur à 1, le spectre de référence $Spref_j$ correspond à une dilatation du spectre de référence initial Spref, l'information du spectre étant dilatée selon un nombre de canaux supérieurs au nombre de canaux constituant le spectre de référence initial Spref.

La figure 4 représente plusieurs spectres de référence $Spref_j$ associés à un coefficient de correction j compris entre 0.8 et 2. Il est précisé que sur la figure 4, l'échelle des abscisses n'est pas linéaire. Chaque colonne de la figure 4, correspondant à une abscisse j, représente un spectre de référence $Spref_j$. Ainsi, à chaque point (j,i) est affecté un poids $P_{ji}$, indiqué par l'échelle de niveaux de gris, ce poids représentant la valeur du spectre $Sp_{refj}$ à l'amplitude i, de telle sorte que $P_{ji} = Sprefj(i)$.

Ainsi, chaque colonne de la figure 4 représente une distribution de probabilité de l'amplitude mesurée par le détecteur, sachant le coefficient de correction j, lorsque le détecteur est irradié par la source de référence Sref, le coefficient de correction j étant l'abscisse de la colonne. Par ailleurs, chaque ligne de la figure 4, correspondant à une amplitude i, représente une distribution de probabilité du coefficient de correction j, lorsque cette amplitude est mesurée, le détecteur étant irradié par la source de référence Sref.

Autrement dit, le détecteur étant irradié par la source de référence Sref, si on mesure un signal S d'amplitude A, la distribution formée par l'ensemble des valeurs Sprefj(A), pour j compris entre $j_{min}$ et $j_{max}$, correspond à une distribution de probabilité du facteur de correction j à appliquer, sachant la mesure de cette amplitude A.

En construisant une pluralité de spectres de référence $Sp_{refj}$, chaque spectre de référence $Spref_j$ correspondant respectivement à une colonne d'abscisse j de la figure 4, on peut établir une pluralité de distributions de probabilité, d'un coefficient de correction j, connaissant une amplitude mesurée A. Ces distributions seront utilisées dans la prochaine étape.

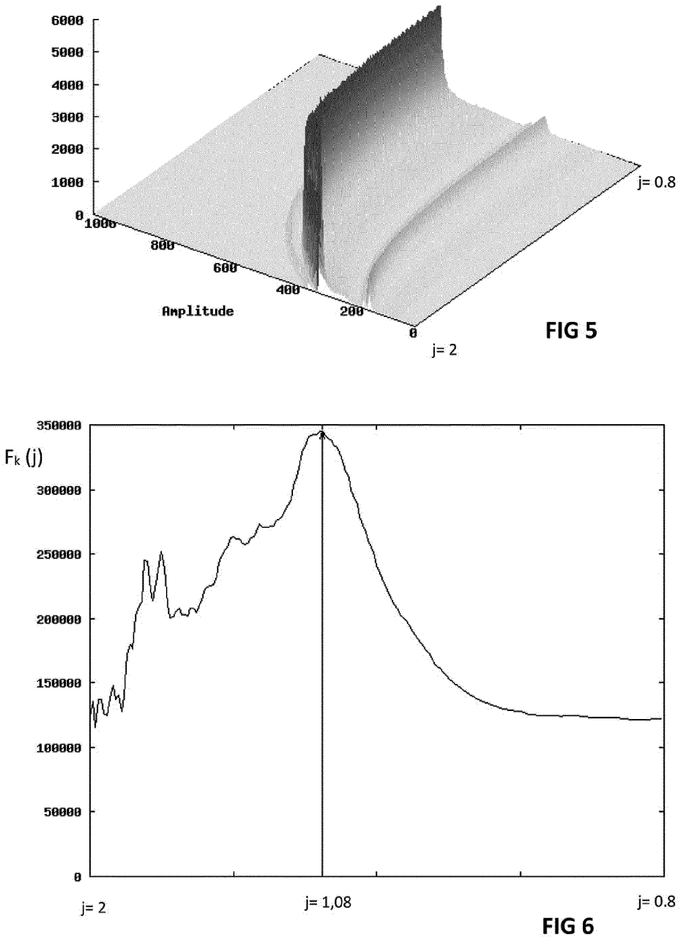

La figure 5 représente une représentation en 3 dimensions de la figure 4. Chaque profil, correspondant à une valeur de coefficient de correction j fixe, représente un spectre de référence $Sp_{refj}$.

La troisième étape 300 consiste à irradier le détecteur en utilisant une source de rayonnement de référence Sref correspondant au spectre de référence Spref. Lors de chaque interaction, un signal électrique, ou une pluralité de signaux électriques (S, S', S"), sont collectés aux bornes d'une ou plusieurs électrodes (E, E', E"), et traité par le circuit d'amplification rattaché à chaque électrode. Comme précédemment décrit, on attribue, à chaque interaction détectée, la valeur k d'un paramètre de position en fonction du signal S ou des signaux S, S', S". Le paramètre de position peut correspondre une position de l'interaction dans le plan des anodes, auquel cas la valeur correspond à une coordonnée $(X_{INT}, Y_{INT})$ de l'interaction dans la plan de l'anode. Le paramètre de position peut correspondre à une profondeur d'interaction $Z_{INT}$, auquel cas plus une interaction est proche de l'anode, plus elle est dite profonde. Dans ce cas, la valeur du paramètre de position correspond à une coordonnée de l'interaction selon un axe perpendiculaire à l'anode et à la cathode.

Dans un premier exemple, on considère que le paramètre de position représente une position $(X_{INT}, Y_{INT})$ dans le plan de l'anode 13 lorsque cette dernière est divisée en anodes élémentaires $13_1...13_p$ coplanaires. Lorsque ces anodes élémentaires sont suffisamment rapprochées les unes des autres, les électrons générés par une interaction sont collectés par plusieurs anodes élémentaires $13_x$, généralement adjacentes. La collection de ces signaux est simultanée, et chaque circuit de traitement $23_x$, relié à une anode élémentaire $13_x$ ayant collecté une quantité de charges significatives, délivre un signal S d'amplitude A.

Ces signaux S sont adressés au circuit de localisation 30, lequel détermine l'anode A0 ayant collecté le signal maximal, dite anode gagnante, et l'anode A1, dite anode secondaire, dont le signal $S_{A1}$ est celui dont l'amplitude $A_{A1}$ est maximale parmi les différentes anodes adjacentes de l'anode gagnante A0.

Le circuit de localisation 30 détermine un ratio entre l'amplitude du signal délivré par l'anode secondaire, notée $A_{A1}$ et l'amplitude du signal délivré par l'anode gagnante, notée $A_{A0}$.

Le ratio $A_{A1} / A_{A0}$ correspond à un coefficient de partage de charges. Il est possible d'établir une fonction g, attribuant une valeur k du paramètre de position de l'interaction en fonction de ce ratio. Autrement dit, k = f($A_{A1} / A_{A0}$).

Plus précisément, si les centres de l'anode gagnante A0 et de l'anode secondaire A1 ont respectivement pour coordonnées $(X_0, Y_0)$ et $(X_1, Y_1)$, les coordonnées $(X_{INT}, Y_{INT})$ de l'interaction INT sont situées sur la droite passant par $(X_0, Y_0)$ et $(X_1, Y_1)$, la distance par rapport au centre $(X_0, Y_0)$ de l'anode gagnante A0 dépendant du paramètre de position k. Plus ce dernier est faible, plus la quantité de porteurs de charges collectée par l'anode gagnante A0 est importante par rapport à l'anode secondaire A1, plus $(X_{INT}, Y_{INT})$ est proche de $(X_0, Y_0)$. Ainsi, la position de l'interaction est déterminée :

- d'une part par les coordonnées du centre $(X_0, Y_0)$ de l'anode gagnante A0 et du centre $(X_1, Y_1)$ de l'anode secondaire A1,
- d'autre part par la valeur k du ratio A1/A0 : par exemple, lorsque A1/A0 = 0, $(X_{INT}, Y_{INT}) = (X_0, Y_0)$ et lorsque

$$A1/A0 = 1, (X_{INT}, Y_{INT}) = (\frac{X0+X1}{2}, \frac{Y0+Y1}{2}).$$

Le circuit de localisation 30 calcule alors la valeur k du paramètre de position de l'interaction, en effectuant un ratio entre les amplitudes $A_{A1}$ et $A_{A0}$.

La quatrième étape 400 consiste à établir une fonction de calibration $F_k$ associée à différentes valeurs k du paramètre de position. Plus précisément, lors de cette étape, on met à jour la fonction de calibration $F_k$ associée à la valeur k du paramètre de position de l'interaction détectée lors de l'étape précédente 300.

Initialement, chaque fonction de calibration $F_k$ est initialisée à une valeur prédéterminée, par exemple à une valeur nulle : quel que soit j, $F_k(j) = 0$. Cette quatrième étape du procédé consiste à mettre à jour chaque fonction $F_k$ de telle sorte qu' à chaque fois qu'une interaction est détectée, dont le paramètre de position est égal à k, on additionne,

à chaque terme $F_k(j)$, la valeur du spectre de référence corrigé $Spref_j$ correspondant à l'amplitude A du signal mesuré à chaque interaction, et cela pour j compris entre $j_{min}$ et $j_{max}$.

Autrement dit, à chaque interaction détectée, on détermine la valeur k du paramètre de position de cette interaction, puis on met à jour la fonction de calibration $F_k$, associée au paramètre de position k, selon l'équation itérative :

Pour tout j compris entre $j_{min}$ et $j_{max}$, $F_k^p(j) = F_k^{p-1}(j) + Spref_j(A)$

où :

- $F_k^{p-1}(j)$ est la valeur du terme $F_k(j)$ précédent l'itération i,

- $F_k^p(j)$ est la valeur du terme $F_k(j)$ après l'itération i,

- A est l'amplitude du signal S mesuré par une électrode suite à une interaction dont le paramètre de position est égal à k. Dans cet exemple, on considère le signal $S_{A0}$ mesuré par l'anode gagnante A0, donc $A = A_{A0}$.

Cette mise à jour itérative est réalisée pour une pluralité d'interactions détectées, ayant un paramètre de position de même valeur k, jusqu'à l'atteinte d'un critère d'arrêt, par exemple un nombre prédéterminé d'itérations ou une valeur maximale atteinte par une ou plusieurs valeurs de la fonction $F_k$.

La figure 6 représente une fonction $F_k$ réalisée après un nombre de mises à jour égal à 1000, pour un paramètre de position dont la valeur k est égale à 0,35. L'axe des abscisses représente les coefficients de corrections j, compris entre jmin et jmax. L'axe des ordonnées représente les valeurs de la fonction de calibration $F_k(j)$.

Pour différentes valeurs k de ce paramètre de position, le circuit de calibration 40 établit une fonction de calibration, notée $F_k$, chaque fonction $F_k$ représentant la distribution de probabilité du facteur de correction j à appliquer lorsque le paramètre de position d'une interaction est égal à k. Plus précisément, chaque terme $F_k(j)$ est proportionnel à la probabilité que le facteur de correction, à appliquer à chaque interaction dont le paramètre de position est égal à k, soit égal à j.

La cinquième étape 500 est la détermination du facteur de correction $j_k$ associé à chaque valeur k du paramètre de position, en fonction d'un point remarquable de la fonction de calibration $F_k$ associée à cette valeur k, et par exemple en fonction du coefficient de correction j pour lequel la fonction $F_k$ prend une valeur maximale.

Dans cet exemple, $j_k = argmax [F_k(j)]$. En se ramenant à l'exemple de la figure 6, cette fonction de calibration prend sa valeur maximale pour j = 1,08. Ainsi, selon cet exemple, $j_k = 1,08$. Cela signifie que lorsque le paramètre de position a pour valeur k=0,35, le facteur de correction à appliquer à l'amplitude $A_{A0}$ du signal de l'anode gagnante est $j_{k=0,35} = 1,08$.

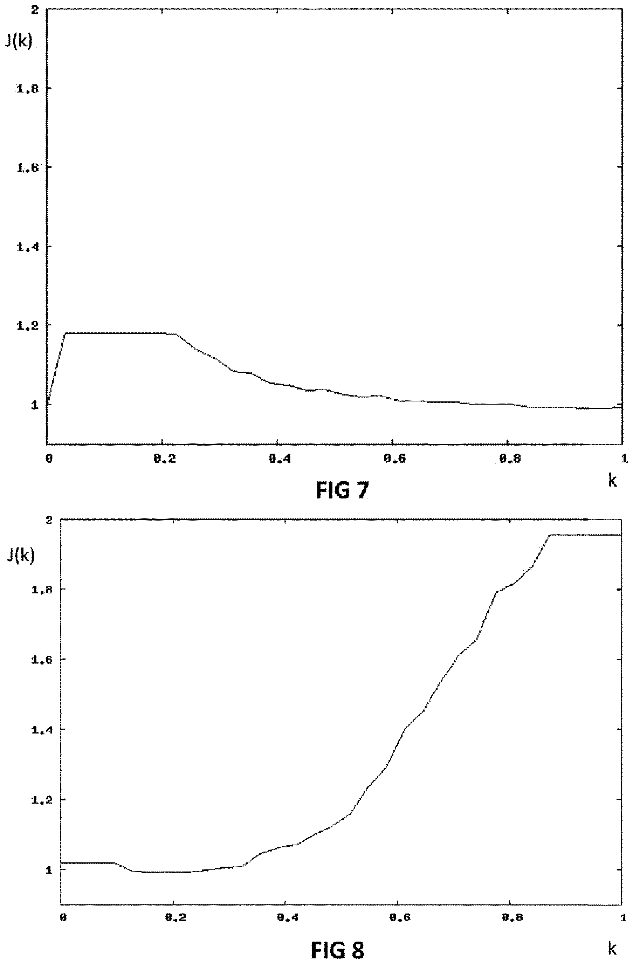

La figure 8 représente la fonction de correction J associée au paramètre de correction, chaque terme J(k) représentant le facteur de correction $j_k$ à adopter en fonction de la valeur k du paramètre de position, ce dernier représentant la position ($X_{INT}$, $Y_{INT}$), par rapport à une anode élémentaire de position ($X_0, Y_0$) de l'interaction dans le plan des anodes comme précédemment expliqué.

Chaque facteur de correction $j_k$ ainsi déterminé est stocké dans une mémoire 50, ce qui fait l'objet de la sixième étape 600. Le stockage peut être effectué sous la forme d'une table, dite table de calibration, effectuant une correspondance entre la valeur k du paramètre de position et le facteur de correction $j_k$.

Selon une variante de ce mode de réalisation, représentée sur la figure 2B, les étapes c) à e) peuvent être réalisées de façon itérative, pour une même valeur k du paramètre de position, le facteur de correction, correspondant à la valeur k du paramètre de position, déterminé lors de chaque itération de rang q étant qualifié de facteur de correction partiel et noté $j_k^q$.

Au-delà de la première itération, lors de la mise à jour de la fonction de calibration $F_k$ associée à chaque valeur k du paramètre de position, l'amplitude A du signal S est pondérée par le produit des facteurs de correction $j_k^1...j_k^q$ correspondant à ladite valeur k, déterminés lors de l'itération précédente ou lors des q itérations précédentes, q désignant le rang de l'itération. Un tel produit $j_k^1 x...x j_k^q$ correspond à un facteur de correction dit intermédiaire associé à la valeur k.

Lors de l'étape e) de la dernière itération, q = Q, Q désignant le nombre d'itérations, le facteur de correction $j_k$ associé à la valeur k du paramètre de position est calculé en réalisant le produit des facteurs de correction partiels $j_k^1...j_k^Q$ successivement acquis lors de chaque série. On constate qu'au fur et à mesure des itérations, les facteurs de correction partiels tendent progressivement vers la valeur 1.

Ainsi, avant la première itération, le facteur de correction associé à la valeur k, noté $j_k^0$, est initialisé à une valeur prédéterminée, par exemple égale à 1. Chaque itération q aboutit à la détermination d'un facteur de correction partiel $j_k^q$, chaque facteur de correction partiel composant le facteur de correction intermédiaire $\prod_{l=1}^{l=q} j_k^l$ utilisé en tant que terme de pondération de l'amplitude mesurée lors de l'itération suivante, de rang q+1. Lors de l'étape e) de la dernière itération, on peut déterminer $j_k$ tel que :

$$j_k = \prod_{l=1}^{l=Q} j_k^l$$

Autrement dit, lors de l'étape e) de la dernière itération, le facteur de correction $j_k$ associé à la valeur k du paramètre de position est déterminé en fonction du produit des facteurs de corrections partiels correspondant à la même valeur k du paramètre de position, ces facteurs de correction partiels ayant été déterminés au cours des itérations précédentes.

Par exemple, si une série désigne la détermination de facteurs de corrections partiels $j_k^q$ en appliquant les étapes c) à e) précédemment décrites, lors de chaque série, l'étape d) comprend une mise à jour itérative de la fonction de calibration $F_k$ telle que:

Pour tout j compris entre $j_{min}$ et $j_{max}$, où : $F_k^{p,q}(j) = F_k^{p-1,q}(j) + Sprefj(\prod_{l=1}^{q-1} j_k^l \times A)$

- $F_k^{p-1,q}(j)$ est la valeur du terme $F_k(j)$ précédent la p$^{ème}$ itération, lors la série de rang q (le terme série désigne ici l'itération q permettant la détermination du facteur de correction partiel $j_k^q$),

- $F_k^{p,q}(j)$ est la valeur du terme $F_k(j)$ après la p$^{ème}$ itération, lors de la série de rang q,

- A est l'amplitude du signal S mesuré par une électrode suite à une interaction dont le paramètre de position est égal à k. Dans cet exemple, on considère le signal $S_{A0}$ mesuré par l'anode gagnante A0, donc A = $A_{A0}$,

- p est l'indice d'itération correspondant à mise à jour de la fonction de calibration. Lors de la première mise à jour, p= 1,

- $j_k^l$ est le facteur de correction partiel associé à la valeur k du paramètre de position, déterminé au cours de la série l, avec 1≤l≤q-1.

Les étapes c) à e) sont alors renouvelées jusqu'à l'atteinte d'un critère d'arrêt : il peut s'agir d'un nombre de séries prédéterminé, d'un faible écart entre deux facteurs de correction partiels $j_k^q$ et $j_k^{q+1}$ successifs.

Typiquement, selon cette variante, le nombre Q de séries est compris entre 2 et 10.

Selon un deuxième exemple, le paramètre de position représente la profondeur d'interaction $Z_{INT}$, déterminée en fonction du signal de l'anode gagnante et du signal de la cathode. Plus précisément, le circuit de localisation 30 détermine l'anode gagnante en comparant les différents signaux émis par les circuits électroniques 23x. Puis, il détermine le ratio entre l'amplitude $A_K$ du signal de la cathode, fournie par le circuit électronique de cathode 22, sur l'amplitude $A_{A0}$ du signal de l'anode gagnante. Le circuit de localisation 30 calcule alors la valeur k du paramètre de position de l'interaction, en effectuant un ratio entre les amplitudes $A_K$ et $A_{A0}$, comme décrit dans la publi He, Zhong « 1-D position sensitive single carrier semiconductor detectors », Nuclear Instruments and Methods in Physics Research, A 380 (1996) 228-231.

Il est possible d'établir une fonction g, attribuant une profondeur de l'interaction dans le détecteur en fonction de ce ratio. Autrement dit, k = g($A_K$/$A_{A0}$).

Le paramètre de position peut prendre différentes valeurs k, comprises entre une valeur minimale kmin (interaction adjacente de l'anode) et une valeur maximale kmax (interaction adjacente de la cathode).

Le procédé de calibration selon ce deuxième exemple reproduit les mêmes étapes que celui de l'exemple précédent :

1ère étape 100 : chargement d'un spectre de référence Spref, correspondant à une source de référence Sref.

2ième étape 200 : établissement d'une pluralité de spectres de références corrigés Spref$_j$, ces spectres de références étant obtenus à partir du spectre de référence Spref, par la relation Spref$_j$(i) = Spref(i/j). De préférence, on introduit un terme de normalisation de telle sorte que :

$$Sprefj\,(i) \;=\; \frac{Spref\,(i/j)}{j}$$

Ces deux premières étapes sont analogues à celles du premier exemple.

3ième étape 300 : irradiation du détecteur à l'aide de la source de référence Sref, et détermination, à chaque interaction, de la valeur k du paramètre de position et de l'Amplitude A du signal S mesuré par une électrode. Dans cet exemple, l'amplitude A est l'amplitude $A_{A0}$ du signal $S_{A0}$ mesuré par l'anode gagnante A0, ainsi que l'amplitude $A_K$ du signal $A_K$ mesuré par la cathode.
4ième étape 400 : A chaque interaction détectée, mise à jour de la fonction de calibration $F_k$, k étant la valeur du paramètre de position.

La mise à jour de la fonction $F_k$ s'effectue selon les mêmes principes que dans l'exemple précédent, et par exemple selon l'expression itérative:
Pour tout j compris entre $j_{min}$ et $j_{max}$, $F_k{}^p(j) = F_k{}^{p-1}(j)+Spref_j(A)$
où :

- $F_k{}^{p-1}(j)$ est la valeur du terme $F_k(j)$ précédent l'itération p,

- $F_k{}^p(j)$ est la valeur du terme $F_k(j)$ après l'iteration p,

- A est l'amplitude du signal S mesuré par une électrode suite à une interaction se produisant à la coordonnée k. Dans cet exemple, on considère le signal $S_{A0}$ mesuré par l'anode gagnante A0, donc A = $A_{A0}$.

De même que dans l'exemple précédent, chaque fonction de calibration $F_k$ est initialisée à une valeur arbitraire, l'ensemble des valeurs de cette fonction pouvant être initialisées à 0.

5ième étape 500 : détermination du facteur de correction $j_k$ associé à chaque valeur k du paramètre de position à partir de la fonction de calibration $F_k$. De façon similaire au premier exemple, chaque facteur $j_k$ peut être tel que :
$j_k$ = argmax[$F_k(j)$].

La figure 7 représente, pour différentes valeurs k du paramètre de position considéré, la fonction de correction J associée à ce paramètre de position, chaque terme J(k) de cette fonction correspondant au facteur de correction $j_k$ à appliquer lorsque la valeur du paramètre de position considéré est égal à k. Sur cette figure, les paramètres de position sont normalisés et sont compris entre une valeur kmin=0 et une valeur kmax = 1.

6ième étape 600 : mémorisation des facteurs de correction $j_k$ correspondant à chaque valeur k du paramètre de position considéré.

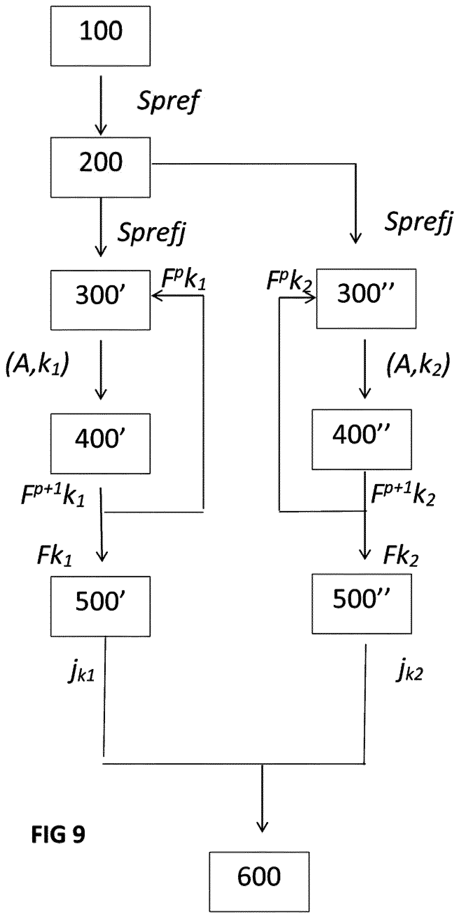

Selon un troisième exemple, représenté sur la figure 9, on réalise successivement deux calibrations :

i une première calibration, dite calibration en profondeur, en déterminant des premiers facteurs de correction $j_{k1}$ en fonction de la valeur $k_1$ d'un premier paramètre de correction correspondant à la profondeur d'interaction, c'est-à-dire de la distance de l'interaction par rapport à l'anode 13,
ii Une deuxième calibration, dite calibration dans le plan de l'anode, en déterminant des deuxièmes facteurs de correction $j_{k2}$ en fonction de la valeur $k_2$ d'un deuxième paramètre de correction, dépendant de la position de l'interaction dans le plan de l'anode 13.

L'avantage lié à ce troisième exemple est qu'on dispose d'un couple de facteurs de correction ($j_{k1}$, $j_{k2}$) en fonction de la position de l'interaction respectivement selon la profondeur du détecteur et dans le plan de l'anode 13. Les facteurs de correction ($j_{k1}$, $j_{k2}$) tiennent alors compte de la position, en 3 dimensions, de l'interaction dans le matériau détecteur 11.
L'ordre dans lequel sont réalisées ces calibrations n'importe pas : la première calibration, selon la profondeur d'interaction, peut être réalisée avant ou après la deuxième calibration, selon la position dans le plan de l'anode 13.
Cependant, une telle calibration peut encore être améliorée. En effet, lorsque deux calibrations successives sont réalisées selon deux paramètres de position (k1, k2) différents, ces deux calibrations sont effectuées indépendamment l'une de l'autre. Lors de la calibration en profondeur le paramètre de position, défini à partir du rapport K/A0 est lui-même affecté par une erreur, liée à position de l'interaction dans le plan de l'anode 13, puisqu'il est déterminé à l'aide du signal de l'anode gagnante, ce dernier n'ayant subi aucune correction. De manière analogue, lors de la calibration dans le plan de l'anode, défini à partir du rapport A1/A0 est affecté par la profondeur d'interaction, puisqu'il est déterminé à l'aide du signal de l'anode gagnante, ce dernier n'ayant subi aucune correction.

Afin d'aboutir à une calibration plus précise, on procède à une calibration itérative, comme décrit dans le quatrième exemple.

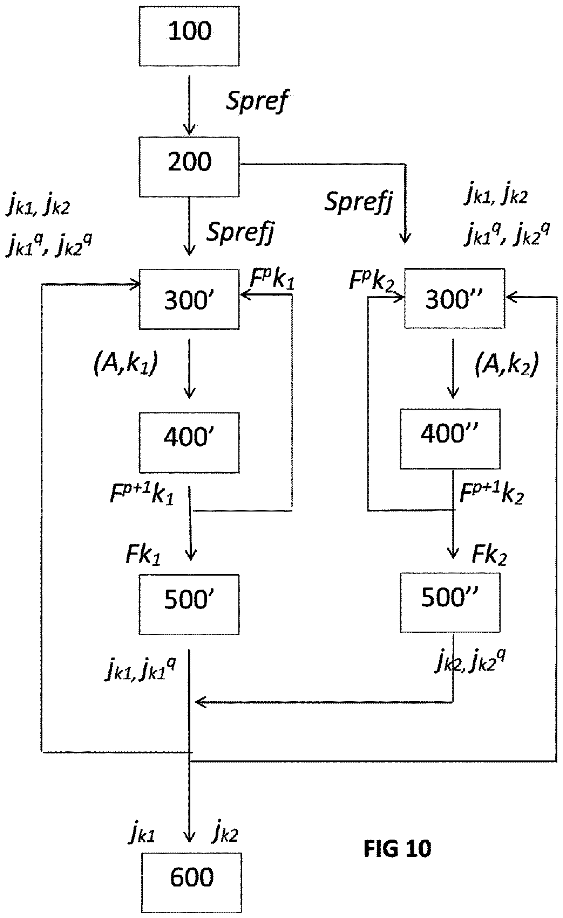

Selon ce quatrième exemple, représenté sur la figure 10, on effectue les étapes 100 et 200 précédemment décrites, puis, alternativement, on considère

i un premier paramètre de position, par exemple la profondeur d'interaction, définie par le rapport $A_K/A_{A0}$. Cela permet d'établir un jeu de premiers facteurs de correction $j_{k1}$, relativement au premier paramètre de correction k1,

ii un deuxième paramètre de position par exemple la position de l'interaction dans la plan de l'anode, définie par le rapport $A_{A1}/A_{A0}$. Cela permet de constituer un jeu de deuxième base de facteurs de correction $j_{k2}$, relativement au deuxième paramètre de correction k2.

Puis, de façon itérative,
On effectue une étape 300', en considérant ledit premier paramètre de position, cette étape étant similaire à l'étape 300 précédemment définie. Cependant, lors de l'étape 300', à chaque interaction détectée, on détermine également la valeur $k_2$ du deuxième paramètre de position. Lors de la mise à jour de la fonction de calibration $F_{k1}$, chaque amplitude mesurée est pondérée par le facteur de correction $j_{k2}$, associé à la valeur $k_2$ deuxième paramètre de correction.

Les facteurs de correction $j_{k1}$ et $j_{k2}$ respectivement associés à l'ensemble des valeurs du premier et du deuxième facteur de correction sont préalablement initialisés à une valeur arbitraire, par exemple 1.

Plus précisément, l'étape 300' comprend :

- l'irradiation du détecteur à l'aide de la source de référence Sref,
- à chaque interaction, détermination de la valeur $k_1$ du premier paramètre de position et de la valeur $k_2$ du deuxième paramètre de position, et mise à jour d'une fonction de calibration $F_{k1}$ associée à ladite valeur k1 du premier paramètre de position, selon la formule :
Pour tout j compris entre $j_{min}$ et $j_{max}$, $F_{ki}^p(j) = F_{ki}^{p-1}(j) + Spref_j(j_{k2} \times A)$
où :

- $F_{k1}^{p-1}(j)$ est la valeur du terme $F_{k1}(j)$ précédent l'itération p,
- $F_{k1}^p(j)$ est la valeur du terme $F_{k1}(j)$ résultant de l'itération p,
- A est l'amplitude du signal S mesuré par une électrode suite à l'interaction. Dans cet exemple, on considère le signal $S_{A0}$ mesuré par l'anode gagnante A0, donc $A = A_{A0}$,
- $j_{k2}$ est le facteur de correction correspondant à la valeur $k_2$ du deuxième paramètre de position, ce paramètre étant soit initialisé à une valeur arbitraire $j_{k2}^0$ (par exemple 1) soit préalablement déterminé.

De même que dans les exemples précédents, chaque fonction de calibration $F_{k1}$ est initialisée à une valeur arbitraire, l'ensemble des valeurs de cette fonction pouvant être initialisées à 0.

L'étape 400' suivante est similaire à l'étape 400 préalablement décrite. Elle comprend la mise à jour des facteurs de correction $j_{k1}$ associés au paramètre de position k1, en fonction de la fonction de calibration $F_{k1}$ associée à ce paramètre de position k1 : $j_{k1} = argmax_j[F_{k1}(j)]$. On détermine alors la fonction de correction $J_1$, telle que $J_1(k_1) = j_{k1}$.

De façon symétrique, on effectue une étape 300", en considérant ledit deuxième paramètre de position, cette étape étant similaire à l'étape 300 précédemment définie. Cependant, lors de l'étape 300", on détermine également, à chaque interaction détectée, la valeur k1 le premier paramètre de position. Lors de la mise à jour de la fonction de calibration $F_{K2}$, associée à la valeur $k_2$ du deuxième paramètre, la valeur $k_1$ du premier facteur de correction $j_{k1}$, associé au premier paramètre de correction, est utilisé en tant que terme de pondération. Plus précisément, l'étape 300" comprend :

i l'irradiation du détecteur à l'aide de la source de référence Sref,
ii A chaque interaction, détermination de la valeur $k_1$ du premier paramètre de position et de la valeur $k_2$ du deuxième paramètre de position, puis mise à jour d'une fonction de calibration associée à la valeur $k_2$ du deuxième paramètre de position, selon la formule :

Pour tout j compris entre $j_{min}$ et $j_{max}$, $F_{k2}^{p-1}(j) = F_{k2}^p(j) + Spref_j(j_{k1} \times A)$ où :

- $F_{k2}^{p-1}(j)$ est la valeur du terme $F_{k2}(j)$ précédent la mise à jour,

- $F_{k2}^{p}(j)$ est la valeur du terme $F_{k2}(j)$ après la mise à jour,

- A est l'amplitude du signal S mesuré par une électrode suite à l'interaction. Dans cet exemple, on considère le signal $S_{A0}$ mesuré par l'anode gagnante A0, donc $A = A_{A0}$,

- $j_{k1}$ est le facteur de correction correspondant à la valeur $k_1$ du premier paramètre de position $k_1$, préalablement déterminé.

De même que dans les exemples précédents, chaque fonction de calibration $F_{k2}$ est initialisée à une valeur arbitraire, l'ensemble des valeurs de cette fonction pouvant être initialisées à 0.

L'étape 400" suivante est similaire à l'étape 400 préalablement décrite Elle comprend la mise à jour des facteurs de correction $j_{k2}$ associés au paramètre de position $k_2$, en fonction de la fonction de calibration $F_{k2}$ associée à la valeur $k_2$ de ce deuxième paramètre de position, selon l'égalité $j_{k2} = \text{argmax}_j[F_{k2}(j)]$. On détermine alors la fonction de correction $J_2$, telle que $J_2(k_2)=j_{k2}$.

Le procédé décrit selon ce mode de réalisation, peut être généralisé à la détermination de N paramètres de position, le procédé de calibration comprenant alors :

- la détermination de N jeux de facteurs de correction, chaque jeu étant associé à un $i^{ème}$ paramètre de position, avec $1 \leq i \leq N$, et $N \geq 1$, chaque jeu comprenant autant de facteurs de correction $j_{ki}$ que de valeurs ki pouvant être prises par chaque $i^{ème}$ facteur de position ki. Autrement dit, selon ce mode de réalisation, on détermine N fonctions de corrections $J_{ki}$, chaque fonction de correction attribuant un facteur de correction $j_{ki}$ en fonction de la valeur ki prise par ledit $i^{ème}$ paramètre de position, selon l'expression $j_{ki} = J_{ki}(ki)$. Cette détermination est effectuée, pour chaque paramètre de correction en répétant les étapes 100 à 600 précédemment décrites.
- l'ajustement des valeurs d'un jeu de correction $j_{ki}$ par les étapes suivantes :

- irradiation du détecteur avec ladite source de référence,
- à chaque interaction, détermination des valeurs des différents de paramètres de position, et mise à jour d'une fonction de calibration $F_{ki}$ associée au paramètre ki, selon la formule :

$$F_{ki}^{p}(j) = F_{ki}^{p-1}(j) + Sprefj(\prod_{i=1}^{N} j_{kn} \times A)$$

Pour tout j compris entre $j_{min}$ et $j_{max}$,

où :

- $F_{ki}^{p-1}(j)$ est la valeur du terme $F_{ki}(j)$ précédent la mise à jour,

- $F_{ki}^{p}(j)$ est la valeur du terme $F_{ki}(j)$ lors de la mise à jour,

- A est l'amplitude du signal S mesuré par une électrode suite à chaque interaction de paramètre de position $k_i$. Dans cet exemple, on considère le signal $S_{A0}$ mesuré par l'anode gagnante A0, donc $A = AS_{A0}$,

- $j_{kn}$ correspondent aux facteurs de correction correspondant aux différentes valeurs prises par les paramètres de position de rang n, avec $1 \leq i \leq N$, ces facteurs étant soient initialisés à une valeur arbitraire $j_{kn}^{0}$, soit préalablement déterminés.

Selon une variante, les étapes c), d) et e) sont répétées de façon itérative, pour une même valeur ki dudit $i^{ème}$ paramètre de position, chaque étape e) aboutissant à la détermination d'un facteur de correction partiel $j_{ki}^{qi}$, qi désignant le rang de l'itération associée à la valeur ki du $i^{ème}$ paramètre de position.

Suite à la première itération, l'étape d) comprend la mise à jour de chaque terme $F_{ki}(j)$ en pondérant ladite amplitude A par le produit des facteurs de correction partiels $j_{ki}^{1}...j_{ki}^{q}$, associés à la valeur ki du $i^{ème}$ paramètre de position de l'interaction, ces facteurs de correction partiels ayant déterminés au cours des $q_i$ itérations précédentes. On constate qu'au fur et à mesure des itérations, les facteurs de correction partiels tendent progressivement vers la valeur 1.

Le procédé comporte alors, lors de l'étape e) de la dernière itération, la détermination du facteur de correction $j_{ki}$ associé à chaque valeur ki du $i^{ème}$ paramètre de position en fonction du produit des facteurs de correction partiels

$j_{ki}^1 \ldots j_{ki}^{Qi}$ déterminés lors desdites itérations successives, $Q_i$ désignant le nombre d'itérations nécessaires relativement à la valeur $k_i$ du $i^{ème}$ paramètre de position. Typiquement, selon cette variante, Qi est compris entre 2 et 10.

Ainsi, avant la première itération, le facteur de correction associé à la valeur $k_i$, noté $j_{ki}^0$, est initialisé à une valeur prédéterminée, par exemple égale à 1. Chaque itération $q_i$ aboutit à la détermination d'un facteur de correction partiel $j_{ki}^{qi}$, chaque facteur de correction partiel composant le facteur de correction intermédiaire $\prod_{l=1}^{l=qi} j_{ki}^l$ utilisé en tant que terme de pondération de l'amplitude mesurée lors de l'itération suivante, de rang $q_{i+1}$. Lors de l'étape e) de la dernière itération, on peut déterminer $j_{ki}$ tel que :

$$j_{ki} = \prod_{l=1}^{l=Qi} j_{ki}^l$$

Autrement dit, lors de l'étape e) de la dernière itération, le facteur de correction $j_{ki}$ associé à la valeur $k_i$ du $i^{ème}$ paramètre de position est déterminé en fonction du produit des facteurs de corrections partiels correspondant à la même valeur $k_i$ du $i^{ème}$ paramètre de position, ces facteurs de correction partiels ayant été déterminés au cours des itérations précédentes.

Par exemple, si une série désigne la détermination de facteurs de corrections partiels $j_{ki}^{qi}$ en appliquant les étapes c) à e) précédemment décrites, lors de chaque série, l'étape d) comprend une mise à jour itérative de la fonction de calibration $F_k$ telle que :

Pour tout j compris entre $j_{min}$ et $j_{max}$, où : $\quad F_{ki}^{p,qi}(j) = F_{ki}^{p-1,qi}(j) + Sprefj(\prod_{l=1}^{qi-1} j_{ki}^l \times K \times A)$

- $F_{ki}^{p-1-q}(j)$ est la valeur du terme $F_{ki}(j)$ précédent la $p^{ème}$ itération, lors la série de rang q (chaque série représente ici une itération permettant la détermination d'un facteur de correction partiel $j_{ki}^{qi}$),
- $F_{ki}^{p,q}(j)$ est la valeur du terme $F_{ki}(j)$ après la $p^{ème}$ itération, lors de la série de rang q,
- A est l'amplitude du signal S mesuré par une électrode suite à une interaction dont le paramètre de position est égal à $k_i$. Dans cet exemple, on considère le signal $S_{A0}$ mesuré par l'anode gagnante A0, donc A = $A_{A0}$,
- p est l'indice d'itération correspondant au rang de la mise à jour de la fonction de calibration. Lors de la première mise à jour, p= 1,
- $j_{ki}^l$ est le facteur de correction partiel associé à la valeur k du paramètre de position, déterminé au cours de la série $l$, avec 1≤$l$≤q-1,
- K est un facteur de pondération, obtenu à partir du produit des facteurs de correction $j_{kn}$, ou du produit des facteurs de correction partiels $j_{kn}^1 \ldots j_{kn}^{qn}$, associés aux valeurs des autres paramètres de position de l'interaction. Plus précisément, la grandeur K comprend le produit de termes de pondération $t_n$, chaque terme de pondération étant associé à la valeur $k_n$ de chaque $n^{ième}$ paramètre de position, avec n≠i, chaque terme $t_n$ étant égal à :

  - soit la valeur initiale du facteur $j_{kn}^0$ de correction $j_{kn}$, par exemple fixée à 1,
  - soit une valeur intermédiaire du facteur de correction $j_{kn}$, correspondant au produit de chaque facteur de correction partiel $j_{kn}^1 \times \ldots \times j_{kn}^{qn}$, ou $\prod_{l=1}^{l=qn} j_{kn}^l$, qn désignant le rang de l'itération relativement à la valeur kn,
  - soit la valeur $j_{kn}$ du facteur de correction associée à la valeur $k_n$, si, pour cette valeur kn, un nombre suffisant d'itérations qn=Qn a été atteint, auquel cas $j_{kn} = j_{kn} = \prod_{l=1}^{l=Qn} j_{kn}^l$.

La formule de mise à jour de la fonction de calibration, selon cet exemple, peut alors être :

$$F_{ki}^{p,qi}(j) = F_{ki}^{p-1,qi}(j) + Sprefj(\prod_{l=1}^{qi-1} j_{ki}^{l} \prod_{n\neq i} \prod_{l=1}^{qn} j_{kn}^{l} \times A)$$

qn désignant le nombre d'itérations atteints pour la détermination du facteur de correction $j_{kn}$.

Les étapes c) à e) sont alors renouvelées jusqu'à l'atteinte d'un critère d'arrêt : il peut s'agir d'un nombre de séries prédéterminé, d'un faible écart entre deux facteurs de correction partiels $j_{ki}^{q}$ et $j_{ki}^{q+1}$ successifs. Typiquement, selon cette variante, le nombre Qi d'itérations est compris entre 2 et 10.

Les facteurs de correction de chaque valeur $k_i$ de chaque paramètre de position sont ensuite stockés dans la mémoire 50.

Quel que soit le mode de réalisation, chaque facteur de correction $j_k$,$j_{ki}$ associé à la valeur $k$,$k_i$ d'un paramètre de position, peut être déterminé pour une pluralité de valeurs discrètes $k$,$k_i$ dudit paramètre de position. Par interpolation, on peut déterminer les facteurs de corrections associés à des valeurs comprises entre lesdites valeurs discrètes. Il peut notamment s'agit d'une interpolation linéaire.

On va à présent décrire un exemple de fonctionnement d'un dispositif de détection tel que schématisé à la figure 1.

Lorsqu'une interaction survient dans le matériau détecteur 11, elle engendre un signal sur la cathode 12 et sur une pluralité d'anodes élémentaires adjacentes 13x. Le circuit de localisation 30 détermine l'anode gagnante A0 ainsi que l'anode secondaire A1 en fonction des signaux électroniques transmis par chaque circuit de traitement 23x associé à une anode élémentaire 13x.

Le circuit de localisation détermine le ratio $A_1/A_0$, en fonction de quoi il détermine un premier paramètre de position $k_1 = f(A_1/A_0)$, représentant les coordonnées ($X_{INT}$, $Y_{INT}$) de l'interaction dans le plan des anodes élémentaires.

Le circuit de localisation 30 détermine alors le ratio $A_K/A_0$, correspondant à l'amplitude du signal de la cathode sur l'amplitude du signal de l'anode gagnante, en fonction de quoi il détermine un deuxième paramètre de position $k_2 = g(K/A_0)$, représentant la coordonnée $Z_{INT}$ de l'interaction entre les anodes élémentaires 13x et la cathode 12.

Le circuit de correction 60 recherche, dans la mémoire 50, les paramètres de corrections $j_{K1}$ et $j_{K2}$ respectivement associés aux dites valeurs $k_1$ et $k_2$, puis corrige la valeur de l'amplitude de l'anode gagnante $A_0$ en la pondérant par le produit $j_{k1}$x $j_{k2}$. L'amplitude corrigée A* est alors telle que

$$A* = j_{k1}x\ j_{k2}\ x\ A_{0.}$$

Durant la phase de fonctionnement du détecteur, le circuit de calibration 40 n'est pas mis en oeuvre.

**Revendications**

1. Procédé de calibration d'un dispositif de détection (1) de rayonnement ionisant, le dispositif (1) comportant un détecteur (10), comportant: un matériau détecteur semi-conducteur (11), s'étendant entre deux électrodes (E, E', E", 12, 13, 13x), au moins une électrode étant apte à générer un signal S d'amplitude A lors d'une interaction d'un rayonnement ionisant dans ledit matériau détecteur; un circuit électronique de traitement (22, 23$_x$), apte à former ledit signal S à partir de porteurs de charges collectés par une électrode lors d'une interaction et d'en déterminer l'amplitude A ; un circuit électronique de localisation (30), apte à déterminer la valeur ($k$, $k_i$) d'au moins un paramètre de position à l'interaction dans le matériau détecteur à partir du signal d'au moins électrode, le procédé de calibration comprenant les étapes suivantes :

   a) irradiation du détecteur (10) à l'aide d'une source de référence (Sref) connue, de façon à générer des interactions dans le matériau détecteur (11),
   b) sélection d'une pluralité de coefficients de correction (j) et détermination de spectres de références (Sp$_{refj}$), chaque spectre de référence étant associé à un coefficient de correction (j), chaque spectre de référence représentant une distribution de l'amplitude (A) du signal (S) généré lorsque le détecteur est irradié par ladite source de référence (Sref), l'amplitude (A) du signal détecté étant pondérée par ledit coefficient de correction (j),
   c) détection d'une pluralité d'interactions dans le détecteur lors de ladite irradiation et, pour chaque interaction, mesure d'au moins une amplitude A d'un signal électronique S généré par une électrode E et détermination de la valeur k d'au moins un paramètre de position de l'interaction en fonction de ladite amplitude A,

d) pour une pluralité de valeurs k dudit paramètre de position, détermination d'une fonction de calibration $F_k$ telle que:

- chaque fonction de calibration $F_k$ est associée à une desdites valeurs k dudit paramètre de position,
- chaque fonction de calibration $F_k$ est définie sur une pluralité de coefficients de correction j,
- chaque terme $F_k(j)$ de ladite fonction de calibration représente une probabilité associée audit coefficient de correction j lorsque le paramètre de position prend la valeur k,
- chaque terme $F_k(j)$ étant mis à jour, à chaque interaction dont le paramètre de position est égal à la valeur k à laquelle ladite fonction de calibration $F_k$ est associée, en combinant l'amplitude A mesurée au cours de cette interaction avec chaque spectre de référence $Sp_{ref}j$,

e) détermination d'un facteur de correction $j_k$ associé à chaque valeur k du paramètre de position par

$$j_k = \arg\max_j \left[ F_k(j) \right] .$$

2. Procédé de calibration selon la revendication 1, dans lequel l'étape d) comprend :

i l'initialisation de chaque fonction de calibration $F_k$ associée à chaque valeur k dudit paramètre de position,
ii à chaque interaction détectée, détermination de la valeur k dudit paramètre de position et mise à jour de la fonction de calibration $F_k$ correspondante, en additionnant, à chaque terme $F_k(j)$ de cette fonction, la valeur du spectre de référence corrigé $Spref_j(A)$ à ladite amplitude A,
iii la répétition de l'étape ii jusqu'à l'atteinte d'un critère d'arrêt prédéfini.

3. Procédé de calibration selon l'une des revendications précédentes, dans lequel :

- les étapes c), d) et e) sont répétées de façon itérative, pour une même valeur k dudit paramètre de position, chaque étape e) aboutissant à la détermination d'un facteur de correction partiel $j_k^q$, q désignant le rang de l'itération,
- et dans lequel, suite à la première itération, l'étape d) comprend la mise à jour de chaque terme $F_k(j)$ en pondérant ladite amplitude A par le produit des facteurs de correction partiels $j_k^1 \ldots j_k^q$, associés à la valeur k du paramètre de position de l'interaction, ces facteurs ayant déterminés au cours des itérations précédentes,

le procédé de calibration comportant alors, lors de l'étape e) de la dernière itération, la détermination du facteur de correction $j_k$ associé à chaque valeur k du paramètre de position en fonction du produit des facteurs de correction partiels $j_k^1 \ldots j_k^Q$ déterminés lors desdites itérations successives, Q désignant le nombre d'itérations.

4. Procédé de calibration selon la revendication 1 comportant :

- à l'étape c), la détermination d'un ensemble de N paramètres de position de l'interaction en fonction du signal S, N étant un entier supérieur à 1,
- à l'étape d), la sélection d'un paramètre de position i parmi les N paramètres de position, et, pour une pluralité de valeurs $k_i$ dudit i-ème paramètre de position, la détermination d'une fonction de calibration $F_{ki}$ telle que:

- chaque fonction de calibration $F_{ki}$ est associée à une desdites valeurs $k_i$ dudit i-ème paramètre de position,
- chaque fonction de calibration $F_{ki}$ est définie sur une pluralité de coefficients de correction j,
- chaque terme $F_{ki}(j)$ de ladite fonction de calibration représente une probabilité associée audit coefficient de correction j lorsque le paramètre de position prend la valeur ki,
- chaque terme $F_{ki}(j)$ étant mis à jour, à chaque interaction dont le i-ème paramètre de position est égal à la valeur ki à laquelle ladite fonction de calibration $F_{ki}$ est associée, en pondérant l'amplitude A, mesurée au cours de cette interaction, par au moins un facteur de correction $j_{kn}$, ledit facteur de correction $j_{kn}$, étant déterminé en fonction de la valeur $k_n$ d'au moins un n-ième paramètre de position caractérisant l'interaction, et en combinant l'amplitude A ainsi pondérée avec chaque spectre de référence $Sp_{ref}j$,

- à l'étape e), la détermination du facteur de correction $j_{ki}$ associé à chaque valeur $k_i$ du $i^{ème}$ paramètre de position en fonction de ladite fonction de calibration $F_{ki}$ associée au $i^{ème}$ paramètre de position, en identifiant un point remarquable de cette fonction.

5. Procédé de calibration selon la revendication 4, dans lequel l'étape d) comprend :

i l'initialisation de chaque fonction de calibration $F_{ki}$ associée à chaque valeur ki du ième paramètre de position $k_i$,
ii à chaque interaction détectée :

- la pondération de la valeur de l'amplitude A mesurée au cours de cette interaction par au moins un facteur de correction $j_{kn}$ dépendant de la valeur $k_n$ d'un $n^{ième}$ paramètre de position caractérisant l'interaction,
- addition, à chaque terme $F_{ki}(j)$ de ladite fonction de calibration, de la valeur du spectre de référence corrigé $Spref_j$ (A*), A* représentant la valeur de l'amplitude A ainsi pondérée,

iii la répétition de l'étape ii jusqu'à l'atteinte d'un critère d'arrêt.

6. Procédé de calibration selon l'une des revendications 4 ou 5, dans lequel l'étape e) comprend la détermination du facteur de correction $j_{ki}$ associé à chaque valeur $k_i$ du $i^{ème}$ paramètre de position en identifiant la valeur de $j_{ki}$ maximisant la valeur de la fonction $F_{ki}$, auquel cas :

$$j_{ki} = argmax_j \left[ F_{ki} \left( j \right) \right]$$

7. Procédé de calibration selon l'une des revendications 4 à 6 dans lequel

■ les étapes c), d) et e) sont répétées successivement pour chaque valeur ki de chacun des N paramètres de position caractérisant chaque interaction,
■ et dans lequel l'étape d) comprend la mise à jour de chaque terme $F_{ki}(j)$ en pondérant ladite amplitude A par le produit de facteurs de correction $j_{kn}$, chaque facteur de correction $j_{kn}$ étant associé à la valeur $k_n$ d'un $n^{ième}$ paramètre de position, chaque facteur de correction $j_{kn}$ étant soit fixé à une valeur initiale prédéterminée, soit déterminé au cours d'une itération précédente.

8. Procédé de calibration selon l'une des revendications 4 à 7, dans lequel :

■ les étapes c), d) et e) sont répétées de façon itérative, pour une même valeur ki dudit $i^{ème}$ paramètre de position, chaque étape e) aboutissant à la détermination d'un facteur de correction partiel $j_{ki}^{qi}$, qi désignant le rang de l'itération,
■ et dans lequel, suite à la première itération, l'étape d) comprend la mise à jour de chaque terme $F_{ki}(j)$ en pondérant ladite amplitude A par le produit des facteurs de correction partiels $j_{ki}^{1}...j_{ki}^{qi}$, associés à la valeur ki du $i^{ème}$ paramètre de position de l'interaction, ces facteurs ayant déterminés au cours des $q_i$ itérations précédentes,

le procédé comportant alors, lors de l'étape e) de la dernière itération, la détermination du facteur de correction $j_{ki}$ associé à chaque valeur $k_i$ du paramètre de position en fonction du produit des facteurs de correction partiels $j_{ki}^{1}...j_{ki}^{Qi}$ déterminés lors desdites itérations successives, $Q_i$ désignant le nombre des itérations.

9. Procédé de calibration selon la revendication 8, dans lequel lors de l'étape d), la fonction de calibration $F_{ki}$ est mise à jour en pondérant aussi l'amplitude A par un facteur de pondération K, ce facteur étant obtenu à partir du produit des facteurs de correction $j_{kn}$, ou des facteurs de correction $j_{kn}^{1}...j_{kn}^{qn}$ partiels, associés aux valeurs $k_n$ des autres paramètres de position de l'interaction.

10. Procédé de calibration selon l'une des revendications précédentes, dans lequel l'étape b) comprend :

i le chargement d'un spectre de référence initial $Sp_{ref}$, préalablement enregistré dans une mémoire, correspondant à ladite source de référence $S_{ref}$, ce spectre $Sp_{ref}$ représentant la distribution de l'amplitude du signal détecté lorsque le détecteur est irradié par ladite source de référence $S_{ref}$,

ii à partir du spectre de référence initial $Sp_{ref}$, la détermination d'une pluralité de spectres de références $Sp_{refj}$, correspondant à un coefficient de correction j, chaque spectre de référence $Sref_j$ étant obtenu à partir du spectre de référence initial $Sp_{ref}$, chaque valeur $Sp_{refj}(i)$ du spectre de référence étant obtenu à partir de la valeur $Spref(i/j)$.

**11.** Procédé de calibration selon l'une des revendications précédentes, dans lequel un paramètre de position k, $k_i$ d'une interaction est obtenu en combinant des signaux résultant de ladite interaction, issus de différentes électrodes (12, 13, 13x).

**12.** Procédé de calibration selon l'une des revendications précédentes, dans lequel l'anode (13) du détecteur étant divisée en une pluralité d'anodes élémentaires (13x) disposées selon un plan, la valeur $(k,k_i)$ d'un paramètre de position à d'une interaction est obtenu en combinant des signaux résultant de ladite interaction, lesdits signaux étant générés,

- par une anode élémentaire (A0) et par une cathode (12), ou
- par deux anodes élémentaires (A0, A1).

**13.** Procédé de calibration selon la revendication 12, dans lequel l'anode du détecteur étant divisée en une pluralité d'anodes élémentaires disposées selon un plan, la valeur $(k,k_i)$ d'un paramètre de position de chaque interaction est obtenu en combinant les signaux :

- de l'anode élémentaire ayant collecté le signal d'amplitude maximale, dite anode gagnante (A0),
- et de l'anode élémentaire adjacente de l'anode gagnante ayant collecté le signal d'amplitude maximale, dite anode secondaire (A1),

auquel cas le paramètre de position détermine la position de ladite interaction dans le plan desdites anodes.

**14.** Procédé de calibration selon la revendication 12, dans lequel l'anode du détecteur étant divisée en une pluralité d'anodes élémentaires, et dans lequel la valeur $(k,k_i)$ d'un paramètre de position de chaque interaction est obtenu en combinant les signaux :

- de l'anode élémentaire ayant collecté le signal d'amplitude maximale, dite anode gagnante (A0),
- de la cathode (12, K),

auquel cas le paramètre de position détermine la position de l'interaction entre l'anode gagnante et la cathode, ce paramètre de position correspondant alors à une profondeur de détection.

**15.** Dispositif de détection d'un rayonnement ionisant, comprenant :

a) un détecteur (10), comportant un matériau détecteur semi-conducteur (11), s'étendant entre deux électrodes (12, 13, $13_x$), le détecteur étant apte à générer des porteurs de charges sous l'effet d'une interaction avec ledit rayonnement ionisant,

b) un circuit électronique de traitement (22, $23_x$), apte à former un signal S à partir de porteurs de charges collectés par une électrode lors d'une interaction et d'en déterminer l'amplitude A,

c) un circuit électronique de localisation (30), apte à déterminer la valeur $(k, k_i)$ d'au moins un paramètre de position à l'interaction dans le matériau détecteur à partir du signal d'au moins électrode, le dispositif de détection étant **caractérisé en ce qu'**il comporte

d) un circuit électronique de calibration (40), configuré pour mettre en oeuvre les étapes b), à

e) de l'un des procédés objet des revendications 1 à 14.

**Patentansprüche**

**1.** Verfahren zur Kalibrierung einer Erfassungsvorrichtung (1) für ionisierende Strahlung, wobei die Vorrichtung (1) einen Detektor (10) umfasst, umfassend: ein halbleitendes Detektormaterial (11), das sich zwischen zwei Elektroden (E, E', E'', 12, 13, 13x) erstreckt, wobei wenigstens eine Elektrode dazu ausgelegt ist, ein Signal S mit einer Amplitude A während einer Interaktion einer ionisierenden Strahlung in dem Detektormaterial zu generieren; eine elektronische Verarbeitungsschaltung (22, 23$_x$), die dazu ausgelegt ist, das Signal S ausgehend von Ladungsträgern zu bilden, die durch eine Elektrode während einer Interaktion gesammelt werden und hieraus die Amplitude A zu bestimmen; eine elektronische Lokalisierungsschaltung (30), die dazu ausgelegt ist, den Wert (k, k$_i$) wenigstens eines Positionsparameters der Interaktion in dem Detektormaterial ausgehend von dem Signal wenigstens einer Elektrode zu bestimmen, wobei das Kalibrierungsverfahren die folgenden Schritte umfasst:

a) Bestrahlen des Detektors (10) mittels einer bekannten Referenzquelle (Sref) derart, dass Interaktionen in dem Detektormaterial (11) generiert werden,

b) Auswählen einer Mehrzahl von Korrekturkoeffizienten (j) und Bestimmen von Referenzspektren (SP$_{refj}$), wobei jedes Referenzspektrum einem Korrekturkoeffizienten (j) zugeordnet ist, wobei jedes Referenzspektrum eine Verteilung der Amplitude (A) des Signals (S) repräsentiert, das generiert wird, wenn der Detektor mittels der Referenzquelle (S$_{ref}$) bestrahlt wird, wobei die Amplitude (A) des erfassten Signals mit dem Korrekturkoeffizient (j) gewichtet wird,

c) Erfassen einer Mehrzahl von Interaktionen in dem Detektor während der Bestrahlung und, für jede Interaktion, Messen wenigstens einer Amplitude A eines elektronischen Signals S, das durch eine Elektrode E generiert wird, und Bestimmen des Werts k wenigstens eines Positionsparameters der Interaktion als Funktion der Amplitude A,

d) für eine Mehrzahl von Werten k des Positionsparameters, Bestimmen einer Kalibrierungsfunktion F$_k$ derart, dass:

- jede Kalibrierungsfunktion F$_k$ einem der Werte k des Positionsparameters zugeordnet ist,
- jede Kalibrierungsfunktion F$_k$ auf einer Mehrzahl von Korrekturkoeffizienten j definiert ist,
- jeder Term F$_k$(j) der Kalibrierungsfunktion eine Wahrscheinlichkeit repräsentiert, die dem Korrekturkoeffizient j zugeordnet ist, wenn der Positionsparameter den Wert k annimmt,
- jeder Term F$_k$(j) bei jeder Interaktion aktualisiert wird, deren Positionsparameter gleich dem Wert k ist, dem die Kalibrierungsfunktion F$_k$ zugeordnet ist, indem man die im Verlauf dieser Interaktion gemessene Amplitude A mit jedem Referenzspektrum Sp$_{ref}$j kombiniert,

e) Bestimmen eines Korrekturfaktors j$_k$, der jedem Wert k des Positionsparameters zugeordnet ist durch

$$j_k = \arg\max_j \left[ F_k(j) \right] \quad .$$

2. Kalibrierungsverfahren nach Anspruch 1, bei dem der Schritt d) umfasst:

i die Initialisierung jeder Kalibrierungsfunktion F$_k$, die jedem Wert k des Positionsparameters zugeordnet ist,
ii bei jeder erfassten Interaktion, das Bestimmen des Werts k des Positionsparameters und das Aktualisieren der entsprechenden Kalibrierungsfunktion F$_k$, indem man bei jedem Term F$_k$(j) dieser Funktion den Wert des korrigierten Referenzspektrums Spref$_j$ (A) zu der Amplitude A addiert,
iii das Wiederholen des Schritts ii, bis ein vordefiniertes Anhaltekriterium erreicht wird.

3. Kalibrierungsverfahren nach einem der vorhergehenden Ansprüche, bei dem:

- die Schritte c), d) und e) auf iterative Weise für ein und denselben Wert k des Positionsparameters wiederholt werden, wobei jeder Schritt e) zur Bestimmung eines partiellen Korrekturfaktors $j_k^q$ führt, wobei q den Rang der Iteration bezeichnet,
- und bei dem im Anschluss an die erste Iteration der Schritt d) die Aktualisierung jedes Terms F$_k$(j) umfasst, indem man die Amplitude A gewichtet mit dem Produkt der partiellen Korrekturfaktoren $j_k^1 ... j_k^q$, die dem Wert k des Positionsparameters der Interaktion zugeordnet sind, wobei diese Faktoren Im Verlauf der vorhergehenden Iterationen bestimmt worden sind,

wobei das Kalibrierungsverfahren dann während des Schritts e) der letzten Iteration die Bestimmung des Korrekturfaktors j$_k$ umfasst, der jedem Wert k des Positionsparameters zugeordnet ist, als Funktion des Produkts der partiellen Korrekturfaktoren $j_k^1 \cdots j_k^Q$ , die während der aufeinanderfolgenden Iterationen bestimmt worden sind, wobei Q die Zahl von Iterationen bezeichnet.

4. Kalibrierungsverfahren nach Anspruch 1, umfassend:

- im Schritt c) die Bestimmung einer Gesamtheit von N Positionsparametern der Interaktion als Funktion des Signals S, wobei N eine ganze Zahl größer als 1 ist,
- im Schritt d) die Auswahl eines Positionsparameters i aus den N Positionsparametern, und, für eine Mehrzahl von Werten $k_i$ des i-ten Positionsparameters die Bestimmung einer Kalibrierungsfunktion $F_{ki}$ derart, dass:

- jede Kalibrierungsfunktion $F_{ki}$ einem der Werte $k_i$ des i-ten Positionsparameters zugeordnet ist,
- jede Kalibrierungsfunktion $F_{ki}$ auf einer Mehrzahl von Korrekturkoeffizienten j definiert ist,
- jeder Term $F_{ki}(j)$ der Kalibrierungsfunktion eine Wahrscheinlichkeit repräsentiert, die dem Korrekturkoeffizient j zugeordnet ist, wenn der Positionsparameter den Wert ki annimmt,
- jeder Term $F_{ki}(j)$ bei jeder Interaktion aktualisiert wird, deren i-ter Positionsparameter gleich dem Wert ki ist, dem die Kalibrierungsfunktion $F_{ki}$ zugeordnet ist, indem man die im Verlauf dieser Interaktion gemessene Amplitude A mit wenigstens einem Korrekturfaktor $j_{kn}$ gewichtet, wobei der Korrekturfaktor $j_{kn}$ bestimmt wird als Funktion des Werts $k_n$ wenigstens eines n-ten Positionsparameters, der die Interaktion charakterisiert, und indem man die derart gewichtete Amplitude A mit jedem Referenzspektrum $Sp_{ref}j$ kombiniert,

- im Schritt e) die Bestimmung des Korrekturfaktors $j_{ki}$, der jedem Wert $k_i$ des i-ten Positionsparameters zugeordnet ist, als Funktion der Kalibrierungsfunktion $F_{ki}$, die dem i-ten Positionsparameter zugeordnet ist, indem man einen speziellen Punkt dieser Funktion identifiziert.

5. Kalibrierungsverfahren nach Anspruch 4, bei dem der Schritt d) umfasst:

i die Initialisierung jeder Kalibrierungsfunktion $F_{ki}$, die jedem Wert $k_i$ des i-ten Positionsparameters $k_i$ zugeordnet ist,
ii bei jeder erfassten Interaktion:

- die Gewichtung der im Verlauf dieser Interaktion gemessenen Amplitude A mit wenigstens einem Korrektorfaktor $j_{kn}$, der vom Wert $k_n$ eines n-ten Positionsparameters abhängt, der die Interaktion charakterisiert,
- das Addieren, zu jedem Term $F_{ki}(j)$ der Kalibrierungsfunktion, des Werts des korrigierten Referenzspektrums $Spref_j(A*)$, wobei A* den derart gewichteten Wert der Amplitude A repräsentiert,

iii die Wiederholung des Schritts ii, bis ein Anhaltekriterium erreicht wird.

6. Kalibrierungsverfahren nach einem der Ansprüche 4 oder 5, bei dem der Schritt e) die Bestimmung des Korrekturfaktors $j_{ki}$ umfasst, der jedem Wert $k_i$ des i-ten Positionsparameters zugeordnet ist, indem man den Wert $j_{ki}$ identifiziert, der die Funktion $F_{ki}$ maximiert, in welchem Fall:

$$j_{ki} = argmax_j \quad [F_{ki}(j)]$$

7. Kalibrierungsverfahren nach einem der Ansprüche 4 bis 6, bei dem :

- die Schritte c), d) und e) sukzessive für jeden Wert ki von jedem der N Positionsparameter wiederholt werden, die jede Interaktion charakterisieren,
- und bei dem der Schritt d) das Aktualisieren jedes Terms $F_{ki}(j)$ umfasst, indem man die Amplitude A mit dem Produkt von Korrekturfaktoren $j_{kn}$ gewichtet, wobei jeder Korrekturfaktor $j_{kn}$ dem Wert $k_n$ eines n-ten Positionsparameters zugeordnet ist, wobei jeder Korrekturfaktor $j_{kn}$ entweder bei einem vorbestimmten Anfangswert festgehalten wird, oder im Verlauf einer vorhergehenden Iteration bestimmt wird.

8. Kalibrierungsverfahren nach einem der Ansprüche 4 bis 7, bei dem:

- die Schritte c), d) und e) auf iterative Weise für ein und denselben Wert ki des i-ten Positionsparameters wiederholt werden, wobei jeder Schritt e) zur Bestimmung eines partiellen Korrekturfaktors $j_{ki}^{qi}$ führt, wobei qi den Rang der Iteration bezeichnet,

■ und bei dem im Anschluss an die erste Iteration der Schritt d) die Aktualisierung jedes Terms F$_{ki}$(j) umfasst,

indem man die Amplitude A mit dem Produkt der partiellen Korrekturfaktoren $j_{ki}^{1}...j_{ki}^{qi}$ gewichtet, die dem Wert ki des i-ten Positionsparameters der Interaktion zugeordnet sind, wobei diese Faktoren im Verlauf der q$_i$ vorhergehenden Iterationen bestimmt worden sind,

wobei das Verfahren dann während des Schritts e) der letzten Iteration die Bestimmung des Korrekturfaktors j$_{ki}$ umfasst, der jedem Wert k$_i$ des Positionsparameters zugeordnet ist, als Funktion des Produkts der partiellen Korrekturfaktoren $j_{ki}^{1}...j_{ki}^{Qi}$, die während der aufeinanderfolgenden Iterationen bestimmt worden sind, wobei Q$_i$ die Zahl der Iterationen bezeichnet.

9. Kalibrierungsverfahren nach Anspruch 8, bei dem während des Schritts d) die Kalibrierungsfunktion F$_{ki}$ aktualisiert wird, indem man auch die Amplitude A mit einem Gewichtungsfaktor K gewichtet, wobei dieser Faktor erhalten wird ausgehend vom Produkt der Korrekturfaktoren j$_{kn}$, oder der partiellen Korrekturfaktoren $j_{ki}^{1}...j_{kn}^{qn}$, die den Werten k$_n$ der anderen Positionsparameter der Interaktion zugeordnet sind.

10. Kalibrierungsverfahren nach einem der vorhergehenden Ansprüche, bei dem der Schritt b) umfasst:

i das Laden eines anfänglichen Referenzspektrums Sp$_{ref}$, das zuvor in einem Speicher aufgezeichnet ist, entsprechend der Referenzquelle S$_{ref}$, wobei dieses Spektrum Sp$_{ref}$ die Verteilung der Amplitude des Signals repräsentiert, das erfasst wird, während der Detektor durch die Referenzquelle S$_{ref}$ bestrahlt wird,
ii ausgehend vom anfänglichen Referenzspektrums Sp$_{ref}$ die Bestimmung einer Mehrzahl von Referenzspektren Sp$_{refj}$ entsprechend einem Korrekturkoeffizient j, wobei jedes Referenzspektrum Spref$_j$ erhalten wird ausgehend vom anfänglichen Referenzspektrum Sp$_{ref}$, wobei jeder Wert Sp$_{ref}$(i) des Referenzspektrums ausgehend vom Wert Spref(i/j) erhalten wird.

11. Kalibrierungsverfahren nach einem der vorhergehenden Ansprüche, bei dem ein Positionsparameter k, k$_i$ einer Interaktion erhalten wird, indem man Signale kombiniert, die aus der Interaktion resultieren und von verschiedenen Elektroden (12, 13, 13x) stammen.

12. Kalibrierungsverfahren nach einem der vorhergehenden Ansprüche, bei dem die Anode (13) des Detektors in eine Mehrzahl von Elementaranoden (13x) unterteilt ist, die in einer Ebene angeordnet sind, wobei der Wert (k, k$_i$) eines Positionsparameters einer Interaktion erhalten wird, indem man Signale kombiniert, die aus der Interaktion resultieren, wobei die Signale generiert werden

- durch eine Elementaranode (A0) und durch eine Kathode (12), oder
- durch zwei Elementaranoden (A0, A1).

13. Kalibrierungsverfahren nach Anspruch 12, bei dem die Anode des Detektors in eine Mehrzahl von Elementaranoden unterteilt ist, die in einer Ebene angeordnet sind, wobei der Wert (k, k$_i$) eines Positionsparameters jeder Interaktion erhalten wird durch Kombinieren der Signale:

- der Elementaranode, die das maximale Amplitudensignal gesammelt hat, genannt Siegeranode (A0),
- und der Elementaranode, die zu der Siegeranode benachbart ist, die das maximale Amplitudensignal gesammelt hat, gennant Sekundäranode (A1),

in welchen Fall der Positionsparameter die Position der Interaktion in der Ebene der Anoden bestimmt.

14. Kalibrierungsverfahren nach Anspruch 12, bei dem die Anode des Detektors in eine Mehrzahl von Elementaranoden unterteilt ist, und bei dem der Wert (k, k$_i$) eines Positionsparameters jeder Interaktion erhalten wird durch Kombinieren der Signale:

- der Elementaranode, die das maximale Amplitudensignal gesammelt hat, genannt Siegeranode (A0),
- der Kathode (12, K),

in welchem Fall der Positionsparameter die Position der Interaktion zwischen der Siegeranode und der Kathode bestimmt, wobei dieser Positionsparameter dann einer Erfassungstiefe entspricht.

15. Erfassungsvorrichtung für eine ionisierende Strahlung, umfassend:

   a) einen Detektor (10), umfassend ein halbleitendes Detektormaterial (11), das sich zwischen zwei Elektroden (12, 13, 13$_x$) erstreckt, wobei der Detektor dazu ausgelegt ist, unter Einwirkung einer Interaktion mit der ionisierenden Strahlung Ladungsträger zu generieren,
   b) eine elektronische Verarbeitungsschaltung (22, 23$_x$), die dazu ausgelegt ist, ein Signal S ausgehend von Ladungsträgern zu bilden, die durch eine Elektrode während einer Interaktion gesammelt werden, und hieraus die Amplitude A zu bestimmen,
   c) eine elektronische Lokalisierungsschaltung (30), die dazu ausgelegt ist, den Wert (k, k$_i$) wenigstens eines Positionsparameters der Interaktion in dem Detektormaterial ausgehend von dem Signal wenigstens einer Elektrode zu bestimmen,

   wobei die Erfassungsvorrichtung **dadurch gekennzeichnet ist, dass** sie umfasst:

   d) eine elektronische Kalibrierungsschaltung (40), die dazu ausgelegt ist, die Schritte b) bis e) eines der Verfahren gemäß den Ansprüchen 1 bis 14 auszuführen.

**Claims**

1. Method of calibrating an ionising radiation detection device (1), the device (1) comprising a detector (10) comprising a semiconducting detection material (11) extending between two electrodes (E, E', E'', 12, 13, 13x), at least one electrode being capable of generating a signal S with amplitude A during an interaction of ionising radiation in said detection material, an electronic processing device (22,23$_x$) adapted to form said signal S from charge carriers collected by an electrode during an interaction and to derive amplitude A therefrom; an electronic positioning circuit (30) adapted to determine the value (k,k$_i$) of at least one position parameter for an interaction in the detection material, from the signal of at least one electrode, said calibrating method comprising the following steps:

   a) irradiation of the detector (10) using a known reference source (Sref) so as to generate interactions in the detector material (11),
   b) selection of a plurality of correction factors (j), and determination of reference spectra (Sp$_{refj}$), each reference spectrum being associated with a correction factor (j), each reference spectrum representing a distribution of the amplitude (A) of the signal (S) generated when the detector is irradiated by said reference source (Sref), the amplitude (A) of the detected signal being weighted by said correction factor (j),
   c) detection of a plurality of interactions in the detector during said irradiation and, for each interaction, measurement of at least one amplitude A of an electronic signal S generated by an electrode E and determination of the value k of at least one position parameter of the interaction as a function of said amplitude A.
   d) for a plurality of values k of said position parameter, determination of a calibration function F$_k$ such that

   - each calibration function F$_k$ is associated with one of said values k of said position parameter
   - each calibration function F$_k$ is defined on a plurality of correction factors j,
   - each term F$_k$(j) of said calibration function represents a probability associated with said correction factor j when the position parameter is equal to the value k,
   - each term F$_k$(j) being updated, at each interaction for which the position parameter is equal to the value k with which said calibration function F$_k$ is associated, combining the amplitude A measured during this interaction with each reference spectrum Sp$_{refj}$,

   e) determination of a correction factor j$_k$ associated with each value k of the position parameter by

$$j_k = \arg\max_{j} \left[ F_k(j) \right] .$$

**2.** Calibration method according to claim 1, in which each step d) comprises:

i initialise each calibration function $F_k$ associated with each value k of said position parameter
ii at each detected interaction, determine the value k of said position parameter and update the corresponding calibration function $F_k$, by adding the value of the corrected reference spectrum $Spref_j$ (A) to each term $F_k(j)$ in this function, at said amplitude A,
iii repeat step ii until a predefined stop criterion is reached.

**3.** Calibration method according to one of the above claims, in which:

■ steps c), d) and e) are repeated iteratively for the same value k of said position parameter, each step e) leading to the determination of a partial correction factor $j_k^q$, where q denotes the iteration rank,
■ and in which, following the first iteration, step d) comprises the update of each term $F_k(j)$ by weighting said amplitude A by the product of partial correction factors $j_k^1...j_k^q$, associated with the value k of the position parameter of the interaction, these values having been determined during the previous iterations.

step e) in the last iteration of the calibration method then comprising determining the correction factor $j_k$ associated with each value k of the position parameter as a function of the product of partial correction factors $j_k^1...j_k^Q$ determined during said successive iterations, where Q denotes the number of iterations.

**4.** Calibration method according to claim 1, comprising:

- step c), determination of a set of N interaction position parameters as a function of the signal S, where N is an integer larger than 1,
- step d), the selection of one position parameter i among the N position parameters, and for a plurality of values $k_i$ of said $i^{th}$ position parameter, the determination of a calibration function $F_{ki}$ such that

■ each calibration function $F_{ki}$ is associated with one of said values $k_i$ of said $i^{th}$ position parameter
■ each calibration function $F_{ki}$ is defined on a plurality of correction factors j,
■ each term $F_{ki}(j)$ of said calibration function represents a probability associated with said correction factor j when the position parameter is equal to the value ki,
■ each term $F_{ki}(j)$ being updated at each interaction for which the $i^{th}$ position parameter is equal to the value ki with which said calibration function $F_{ki}$ is associated, by weighting the amplitude A measured during this interaction, by at least one correction factor $j_{kn}$, said correction factor $j_{kn}$, being determined as a function of the value $k_n$ of at least one $n^{th}$ position parameter characterising the interaction, and combining the amplitude A thus weighted with each reference spectrum $Sp_{ref}j$.

- in step e), determination of the correction factor $j_{ki}$ associated with each value $k_i$ of the $i^{th}$ position parameter as a function of said calibration function $F_{ki}$ associated with the $i^{th}$ position parameter, identifying a remarkable point of this function.

**5.** Calibration method according to claim 4, in which each step d) comprises:

i initialise each calibration function $F_{ki}$ associated with each value $k_i$ of the ith position parameter $k_i$
ii at each detected interaction

- weight the value of the amplitude A measured during this interaction by at least one correction factor $j_{kn}$ dependent on the value $k_n$ of an $n^{th}$ position parameter characterising the interaction,
- to each term $F_{ki}(j)$ of said calibration function, add the value of the corrected reference spectrum $Spref_j$ (A*), where A* represents the value of the amplitude thus weighted,

iii repeat step ii until a stop criterion is reached.

**6.** Calibration method according to one of claims 4 and 5, in which step e) includes determination of the correction

factor $j_{ki}$ associated with each value $k_i$ of the $i^{th}$ position parameter by identifying the value of $j_{ki}$ that maximises the value of the function $_{ki}$, in which case:

$$j_{ki} = argmax_j \left[ F_{ki}(j) \right]$$

7. Calibration method according to one of claims 4 to 6, in which:

   ▪ steps c), d) and e) are repeated successively for each value ki of each of the N position parameters characterising each interaction,
   ▪ and in which step d) comprises the update of each term $F_{ki}(j)$ by weighting said amplitude A by the product of partial correction factors $j_{kn}$, each correction factor $j_{kn}$ being associated with the value $k_n$ of an $n^{th}$ position parameter, each correction factor $j_{kn}$ either being fixed to a predetermined initial value, or determined during a previous iteration.

8. Calibration method according to one of claims 4 to 7, in which:

   ▪ steps c), d) and e) are repeated iteratively for the same value ki of said $i^{th}$ position parameter, each step e) leading to the determination of a partial correction factor $j_{ki}^{qi}$, where qi denotes the iteration rank,
   ▪ and in which, following the first iteration, step d) comprises the update of each term $F_{ki}(j)$ by weighting said amplitude A by the product of partial correction factors $j_{ki}^{1}...j_{ki}^{qi}$, associated with the value ki of the $i^{th}$ position parameter of the interaction, these factors having been determined during the previous $q_i$ iterations.

   the method then includes, in step e) in the last iteration, determining the correction factor $j_k$ associated with each value $k_i$ of the position parameter as a function of the product of partial correction factors $j_{ki}^{1}...j_{ki}^{Qi}$ determined during said successive iterations, where $Q_i$ denotes the number of iterations.

9. Calibration method according to claim 8, in which in step d), the calibration function $F_{ki}$ is updated by also weighting the amplitude A by a weighting factor K, this factor being obtained from the product of correction factors $j_{kn}$, or partial correction factors $j_{kn}^{1}...j_{kn}^{qn}$ associated with values $k_n$ of the other position parameters of the interaction.

10. Calibration method according to one of the above claims, in which step b) comprises:

    i load an initial reference spectrum $Sp_{ref}$ previously saved in a memory, corresponding to said reference source $S_{ref}$, this spectrum $Sp_{ref}$ representing the distribution of the amplitude of the detected signal when the detector is irradiated by said reference source $S_{ref}$,
    ii starting from the initial reference spectrum $Sp_{ref}$, determine a plurality of reference spectra $Sp_{refj}$, corresponding to a correction factor j, each reference spectrum $Sp_{refj}$ having been obtained from the initial reference spectrum $Sp_{ref}$, each value $Sp_{refj}(i)$ of the reference spectrum being obtained from the value Spref (i/j).

11. Calibration method according to one of the above claims, in which a position parameter k, $k_i$ of an interaction is obtained by combining signals resulting from said interaction output from the different electrodes (12, 13, 13x).

12. Calibration method according to one of the above claims, in which the anode (13) of the detector is divided into a plurality of elementary anodes (13X) located in a plane, the value (k,$k_i$) of a position parameter for an interaction is obtained by combining signals resulting from said interaction, said signals being generated,

    - by an elementary anode (A0) and by a cathode (12), or
    - by two elementary anodes (A0, A1).

13. Calibration method according to claim 12, in which the anode of the detector is divided into a plurality of elementary anodes located in a plane: the value $(k, k_i)$ of a position parameter for each interaction is obtained by combining signals:

- from the elementary anode that collected the signal with the maximum amplitude, called the winning anode (A0),
- and from the elementary anode adjacent to the winning anode that collected the signal with the maximum amplitude, called the secondary anode (A1),

in which case the parameter determines the position of said interaction in the plane of said anodes.

14. Calibration method according to claim 12, in which the anode of the detector is divided into a plurality of elementary anodes, and in which the value $(k, k_i)$ of a position parameter for each interaction is obtained by combining signals:

- from the elementary anode that collected the signal with the maximum amplitude, called the winning anode (A0),
- from the cathode (12, K),

in which case the position parameter determines the position of the interaction between the winning anode and the cathode, this position parameter then corresponding to a detection depth.

15. Device for detection of ionising radiation comprising:

a) a detector (10), comprising a semiconducting detection material (11) extending between two electrodes (12, 13, $13_x$), the detector being capable of generating charge carriers under the effect of an interaction with ionising radiation,
b) an electronic processing circuit (22, $23_x$) capable of forming a signal S from charge carriers collected by an electrode during an interaction and determining its amplitude A,
c) an electronic localisation circuit (30), capable of determining the value $(k, k_i)$ of at least one position parameter at the interaction in the detection material from the signal from at least one electrode,

said detection device being **characterized in that** it comprises

d) an electronic calibration circuit (40) configured to implement steps b) to e) in one of the methods according to claims 1 to 14.

**FIG 1**

**FIG 2A**

**FIG 2B**

**FIG 3**

**FIG 4**

**FIG 5**

**FIG 6**

**FIG 7**

**FIG 8**

FIG 9

FIG 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

* US 20110297838 A1


**Littérature non-brevet citée dans la description**

* **HE, ZHONG.** 1-D position sensitive single carrier semiconductor detectors. *Nuclear Instruments and Methods in Physics Research,* 1996, vol. A 380, 228-231